# EUROPÄISCHE PATENTSCHRIFT

(11) **EP 3 419 418 B1**
(45) Veröffentlichungstag und Bekanntmachung des Hinweises auf die Patenterteilung: **08.01.2025**
(21) Anmeldenummer: 17706479.7
(22) Anmeldetag: 22.02.2017
(51) Int. Cl.: A01N 25/04, A01N 43/56, A01N 43/42, A01N 25/14, A01N 47/36, A01P 13/00

(54) **LÖSUNGSMITTELFREIE FORMULIERUNGEN UMFASSEND KRISTALLINES MEFENPYR-DIETHYL**
SOLVENT-FREE FORMULATIONS COMPRISING CRYSTALLINE MEFENPYR-DIETHYL
COMPOSITIONS SANS SOLVANT COMPRENANT DE LA MÉFENPYR-DIÉTHYLE

(30) Priorität: 26.02.2016 EP 16157517
(43) Veröffentlichungstag der Anmeldung: 02.01.2019
(73) Patentinhaber: Bayer CropScience Aktiengesellschaft, 40789 Monheim am Rhein (DE)
(72) Erfinder: KRAUSE, Jens, 51375 Leverkusen (DE); RÖCHLING, Andreas, 40764 Langenfeld (DE); KRÜGER, Joachim, 40789 Monheim (DE); KRAUSE, Hans-Peter, 65719 Hofheim (DE); RATSCHINSKI, Arno, 40627 Düsseldorf (DE)
(74) Vertreter: BIP Patents
(86) Internationale Anmeldenummer: PCT/EP2017/053987
(87) Internationale Veröffentlichungsnummer: WO 2017/144497

(56) Entgegenhaltungen:
- EP-A1- 1 319 336
- EP-A2- 1 060 667
- WO-A1-2013/186652

## Beschreibung

Die vorliegende Erfindung betrifft lösemittelfreie wässrige Suspensionskonzentrate, als auch lösemittelfreie feste, wasserdispergierbare Formulierungen, enthaltend ein oder mehrere niedrig schmelzende Wirkstoffe sowie Verfahren zu deren Herstellung. Die erfindungsgemäßen Formulierungen eignen sich für den Bereich des Pflanzenschutzes.

Wirkstoffe können prinzipiell auf viele verschiedene Arten formuliert werden, wobei die Eigenschaften der Wirkstoffe und Art der Formulierung Probleme hinsichtlich der Herstellbarkeit, Stabilität, Anwendbarkeit und Wirksamkeit der Formulierungen aufwerfen können. Außerdem sind bestimmte Formulierungen aus ökonomischen und ökologischen Gründen vorteilhafter als andere.

Formulierungen auf Wasserbasis haben in der Regel den Vorteil, dass sie einen geringen Anteil oder keinen Anteil an organischen Lösungsmitteln benötigen.

Andererseits besteht generell ein Bedarf an hochkonzentrierten Formulierungen von Wirkstoffen, weil die höhere Konzentration vielerlei Vorteile hat. Beispielsweise wird mit hochkonzentrierten Formulierungen ein geringerer Verpackungsaufwand nötig als mit niedrigkonzentrierten Formulierungen. Entsprechend reduziert sich der Aufwand für Herstellung, Transport und Lagerung. Darüberhinaus vereinfacht sich z.B. die Zubereitung der in der Landwirtschaft eingesetzten Spritzbrühen durch die kleineren Mengen an beispielsweise Pflanzenschutzmittel, welche gehandhabt werden müssen, wie z.B. beim Abfüll- und Mischvorgang. Zudem sind wasserkonzentrierte Formulierungen meist nicht nur höher konzentriert als organische, lösemittelhaltige Formulierungen, sondern auch ökologisch gewünscht, da sie frei von Lösemitteln sind. Ebenfalls hochkonzentriert sind wasserdispergierbare Granulat-Formulierungen (WG). Sowohl wasserdispergierbare Granulate als auch Suspensionskonzentrate (SC) sind aus ökonomischer und ökologischer Sicht daher bevorzugt.

Jedoch lassen sich einige Stoffe, wie etwa Herbizid Safener, auf Grund ihres niedrigen und breiten Schmelzbereichs sowie ihrer amorphen Struktur nicht direkt in Wasser geben, so dass sie zunächst in organischen Lösemitteln gelöst bzw. formuliert werden müssen. Sie werden dann beispielsweise als organische Dispersionen, wässrige Emulsion, Suspoemulsion, Kapselsuspension oder als Emulsionskonzentrat formuliert, wobei der niedrig schmelzende Wirkstoff gelöst bzw. emulgiert vorliegt. Nachteilig ist hierbei, dass durch die Zugabe von organischen Lösemitteln keine wässrigen Dispersionen erhalten werden können, sondern sich wässrige Emulsionen oder Suspoemulsionen bilden, die deutlich instabiler in der Lagerung und meist auch niedriger konzentriert sind als reine wässrige Dispersionen. Bei der Weiterverarbeitung des Technischen Konzentrats zu einem wasserdispergierbarem Granulat bleiben bei den üblicherweise verwendeten Mineralölen als Lösemittel (wie beispielsweise Solvesso^{®} 200 ND von ExxonMobil) bis zu 20 Gew.-% im Endprodukt zurück.

Bei den auf dem Markt erhältlichen wasserdispergierbaren Granulaten können Qualitätsbeeinträchtigungen entstehen. Dazu zählen: mangelnde Dispergierbarkeit/Suspendierbarkeit, nicht akzeptable Siebrückstände, mangelnde Rieselfähigkeit bzw. Kompaktierung des Schüttgutes, Verstopfung von Filtern und Düsen oder hartnäckige Verschmutzung der Spritzgeräte.

Insgesamt sind die aus dem Stand der Technik bekannten flüssigen Formulierungen, die als Herbizid-Safener Mefenpyr-diethyl oder Cloquintocet-mexyl enthalten, Emulsionskonzentrate oder Öldispersionen. Rein wässrige Dispersionen oder daraus resultierende Granulate dieser Herbizid-Safener sind bisher nicht bekannt.

Gerade Herbizid Safener (beispielsweise Mefenpyr-diethyl oder Cloquintocet-mexyl) liegen oftmals als veresterte Säuren vor, die in ihrer technischen Qualität als erstarrte Schmelze mit einem Schmelzbereich zur Verfügung stehen. Erst die Überführung in ein Pulver durch Aufreinigung mit gezielter Kristallisation würde eine direkte Zugabe des so erhaltenen Pulvers in die wässrige Phase ermöglichen. Diese Aufreinigung ist jedoch nicht nur technisch aufwändig und teuer, sondern sind diese Partikel auch beim Vermahlen nur schwach stabilisiert und neigen daher beim Vermahlen zum Verkleben.

Aus dem Stand der Technik sind bereits höher konzentrierte wässrige Suspensionskonzentrate bekannt, wie z.B. von Schwefel (EP-A-0220655) und Metamitron (EP-A-0620971), oder Mischungen aus Formaldehydkondensationsprodukten, bevorzugt Ligninsulfonaten und Netzmittel.

In der WO-A 91/07874 werden Mefenpyr-diethyl-haltige Formulierungen offenbart. Die dort genannten wässrigen Dispersionskonzentrate enthalten jedoch organisches Lösemittel in einer Menge von 77 Gew.-%, so dass es sich um Suspoemulsionen handelt.

US-P 5,785,976 und WO-A 03/034822 beschreiben Schmelzdispersionen, allerdings liegen die Stoffe hier in einem amorphen Zustand in Nanometergröße vor. Hierbei werden die Vorkonzentrate schockartig abgekühlt, so dass keine kontrollierte, homogen kristalline Dispersion entsteht. Eine Vermahlung mit weiteren dispergierten Wirkstoffen ist zudem nicht möglich, da es zum Verkleben der Partikel untereinander kommt.

EP 1319336 beschreibt ein Verfahren zur Herstellung einer lösungsmittelfreien Suspension von niedrigschmelzenden, wasserunlöslichen festen agrochemischen Wirkstoffen.

Nachteilig an den aus dem Stand der Technik bekannten Formulierungen (ob als Suspensionskonzentrat oder wasserdispergierbares Granulat) ist, dass hohe Mengen an für die Umwelt und den Anwender unerwünschten organischen Lösemittel zur Lösung des Safeners verwendet werden müssen.

Es besteht somit nach wie vor Bedarf an neuen Formulierungen in Form von wässrigen Dispersionen, die einen niedrig schmelzenden Herbizid-Safener mit einem Schmelztemperaturbereich enthalten und die ohne organische Lösungsmittel hergestellt werden sowie daraus herstellbare feste, wasserdispergierbare Granulate. Das wasserdispergierbare Granulat sollte darüberhinaus nicht agglomerieren oder verkleben. Aufgabe der vorliegenden Erfindung bestand somit in der Bereitstellung von wässrigen, lösungsmittelfreien Formulierungen (SC) sowie festen, wasserdispergierbaren Formulierungen (WG) auf Basis eines niedrig schmelzenden Herbizid-Safeners mit einem niedrigen Schmelztemperaturbereich. Gegenstand der vorliegenden Erfindung ist ein Verfahren zur Herstellung wässriger, lösungsmittelfreier Formulierungen, dadurch gekennzeichnet, dass zunächst in einem ersten Schritt mindestens ein agrochemischer Wirkstoff a) mit einem Schmelztemperaturbereich zwischen 50°C und 80°C aufgeschmolzen wird, anschließend die Schmelze unter Rühren in Wasser gegeben wird, wobei das Wasser mindestens ein ionisches und/oder nicht-ionisches Dispergiermittel b) enthält und in einem zweiten Schritt die Mischung unter den Schmelzpunkt des Wirkstoffs abgekühlt wird. Erfindungsgemäss ist der Wirkstoff a) Mefenpyr-diethyl.

Im erfindungsgemäßen Verfahren hat das Wasser eine Temperatur zwischen 0°C und 40 °C, bevorzugt zwischen 5°C und 20°C.

Im zweiten Schritt des erfindungsgemäßen Verfahrens wird während der Abkühlung für eine Dauer von 5 Minuten bis 24 h gerührt, bevorzugt für 10 Minuten bis 15 Stunden gerührt, mit der Bedingung, dass sich Mefenpyr-diethyl-Kristalle im Mikroskop zu mindestens 90 Gew.-%, bezogen auf eingesetztes Mefenpyr-diethyl, nachweisen lassen. Hierbei darf der kristalline Wirkstoff keine amorphe Struktur mehr aufweisen.

Im erfindungsgemäßen Verfahren wird im ersten Schritt die Komponente a) in eine wässrige Lösung, enthaltend ein ionisches Dispergiermittel b1) und ein Trägermaterial c1) sowie ein Füllstoff c2) gegeben. Bevorzugt erfolgt für diese Ausführungsform (I) in einem dritten Schritt die Vermahlung des auskristallisierten Produktes, wobei mindestens 50% der Partikel eine Größe von 1 bis 5 µm (d50, Volumenpartikel) aufweisen. Die so erhältlichen Formulierungen sind Technische Konzentrate (TK). Ebenfalls möglich ist es im erfindungsgemäßen Verfahren neben dem ionischen Dispergiermittel b1) noch ein nicht-ionisches Dispergiermittel b2) zuzugeben. Erfindungsgemäss ist das Trägermaterial c1) ein hochsaugfähiger Träger aus der Gruppe der Kieselsäuren mit einer Aufnahmefähigkeit von wenigstens 200 g Dibutylphthalat pro 100 g Trägermaterial.

Ebenfalls Gegenstand der vorliegenden Erfindung sind Technische Konzentrate (TK) erhältlich nach dem erfindungsgemäßen Verfahren.

Bevozugt erfolgt nach dem dritten Schritt des erfindungsgemäßen Verfahrens (I) die Entfernung des Wassers aus dem TK. Besonders bevorzugt erfolgt die Entfernung des Wassers mit Hilfe der Wirbelschichttechnik. Die so erhältlichen Produkte sind wasserdispergierbare Granulate (WG). Gegenstand der vorliegenden Erfindung sind daher auch wasserdispergierbare Granulate (WG) erhältlich nach dem erfindungsgemäßen Verfahren.

Wirbelschichttechnik ist ein gängiger Prozess zur Herstellung wasserdispergierbarer Granulate (WG). Das Prinzip besteht dabei darin, das Teilkonzentrat in eine Wirbelschichtkammer einzudüsen. Dabei wird der wässrige Anteil bei der dort herrschenden erhöhten Temperatur abgetrocknet und ausgekreist. Dies erfolgt durch Eindüsung von Heizgas, z.B. Stickstoff. Die gelösten oder dispergierten Stoffe agglomerieren schließlich zu festen Granulaten.

In einer weiteren bevorzugten Ausführungsform (II) des erfindungsgemäßen Verfahrens wird in einem ersten Schritt die Komponente a) in eine wässrige Lösung, enthaltend ein ionisches Dispergiermittel b1), ein nicht-ionisches Dispergiermittel b2) und ein Trägermaterial c1) gegeben. Bevorzugt erfolgt für diese Ausführungsform (II) in einem dritten Schritt die Vermahlung des auskristallisierten Produktes, wobei mindestens 50% der Partikel eine Größe von 1 bis 5 µm (d50, Volumenpartikel) aufweisen, und nach der Vermahlung ein organischer Verdicker d1) zugegeben wird. Die mit der Ausführungsform (II) erhältlichen Formulierungen sind wasserdispergierbare Suspensionskonzentrate (SC).

Ebenfalls Gegenstand der vorliegenden Erfindung sind wasserdispergierbare Suspensionskonzentrate (SC) erhältlich nach dem erfindungsgemäßen Verfahren.

Das Vermahlen kann nach denen im Stand der Technik bekannten Verfahren erfolgen, z.B. durch Nassvermahlung der Komponenten in Perlmühlen (wie z.B. diskontinuierliche Perlmühlen, oder kontinuierliche Perlmühlen), oder Kolloidmühlen (wie z.B. Zahnkolloidmühlen).

Der Anteil an Wasser in den erfindungsgemäßen Formulierungen kann im allgemeinen 25 bis 98 Gew.-%, bevorzugt 35 bis 85 Gew.-% betragen. Dabei bezieht sich die Angabe "Gew.-%" (Gewichtsprozent) hier und in der gesamten Beschreibung, wenn nicht anders definiert, auf das relative Gewicht der jeweiligen Komponente bezogen auf das Gesamtgewicht der Formulierung bzw. des Teilkonzentrats. Die Formulierung kann typischerweise Reste organischer Lösemitteln aus den Zusatzstoffen von 0 bis 5% enthalten. Lösemittelfrei im Sinne der Erfindung bedeutet, dass Komponente a) flüssig ohne Lösemittel zugegeben wird und in der fertigen Dispersionen nicht gelöst vorliegt, sondern ungelöste Kristalle (Dispersion) bildet.

Geeignete Wirkstoffe a) sind alle agrochemischen Wirkstoffe, die im festen Zustand über einen Schmelztemperaturbereich zwischen 50°C und 80°C verfügen.

Beispielsweise seien als Wirkstoffe a) mit einem Schmelztemperaturbereich zwischen 50 und 80°C genannt:
Anilofos, Acephate, Benfluralin, Bifenthrin, Bupirimate, Butralin, Chloressigsäure, Cyfluthrin, Cypermethrin, Demeton-S-methylsulphon, Dimethametryn, Dimethoate, Dioxabenzofos, Diphenylamine, Dithiopyr, Dodemorphacetat, Esfenvalerate, Ethalfluralin, Ethofumesate, Fenazaquin, Fenitropan, Fenoxycarb, Fenuron-TCA, Fenvalerate, Fluoroglycofen-ethyl, Flupyradifuron, Flurazole, Flurochloridone, Fluroxypyr-meptyl, Flusilazole, Furalaxyl, Haloxyfop-etotyl, Haloxyfop-methyl, Imazalil, Ioxynil octanoate, Isoprothiolane, Metalaxyl, Methomyl, Methoprotryne, Monocrotophos, Nitrapyrin, Nitrothal-isopropyl, Penconazole, Pendimethalin, Permethrin, Propamocarb hydrochloride, Propaquizafop, Pyrazophos, Quizalofop-P-tefuryl, Resmethrin, Trichloroacetic acid, Tetramethrin, Thiofanox, Triflumizole, Pyridaphenthion, 2-Phenylphenol, Dimethylvinphos, beta-Cypermethrin, Famphur, Clodinafop-propargyl, Cloquintocet-mexyl, Triazamate, Tebufenpyrad, Pyrimidifen, Aldrin, Bromophos, Dialifos, Pyriminobac-methyl, Mefenpyr-diethyl, Benzoylprop, Benzoylprop-ethyl, Binapacryl, Camphechlor, Chlorfenethol, Chlorfenprop, Chlorfenprop-methyl, Chlorphoxim, Crufomate, Cyometrinil, 1,1-Dichlor-2,2-bis(4-ethylphenyl)ethan, Dimetilan, Dinobuton, Fenson, Fenthiaprop, Fenthiaprop-ethyl, Fluenetil, Glyodin, 2-Isovalerylindan-1,3-dion, Methoxyphenone, 2-Methoxyethylmercury chloride, Nitrofen, Indanofan, Acequinocyl, Ipsdienol mit (S)-cis-Verbenol, Fenoxanil, Pyraclostrobin, Trifloxystrobin, Cyflufenamid, gamma-Cyhalothrin, Proquinazid, 2,6-Diisopropylnaphthalen, Isotianil.

Bevorzugt werden als Wirkstoffe a) solche Verbindungen eingesetzt, die als Ester vorliegen und einen Schmelztemperaturbereich aufweisen. Besonders bevorzugt sind Wirkstoffe aus der Gruppe der Herbizidsafener. Ganz besonders bevorzugt sind Mefenpyr-diethyl oder Cloquintocet-mexyl.

Erfindungsgemäß ist der Wirkstoff a) Mefenypr-diethyl. Bevorzugt werden diese Formulierungen in Getreidekulturen eingesetzt.

Der Anteil an Wirkstoffen (Komponente a) in den erfindungsgemäßen Formulierungen beträgt 0,5 bis 40 Gew.-%, bevorzugt 0,5 bis 30 Gew.-%, besonders bevorzugt 0,5 bis 15 Gew.-% und ganz besonders bevorzugt 1 bis 8 Gew.-%.

Geeignete anionische Dispergiermittel b1) wie Emulgatoren, Tenside, Netzmittel und Dispergatoren sind beispielweise Alkali-, Erdalkali- oder Ammoniumsalze von Sulfonaten, Sulfaten, Phosphaten, Carboxylaten und deren Mischungen wie z.B. die Salze der Alkylsulphonsäuren oder Alkylphosphorsäuren sowie Alkylarylsulphon- oder Alkylarylphosphorsäuren, Diphenylsulfonate, alpha-Olefinsulfonate, Ligninsulfonate, Sulfonate von Fettsäuren und Ölen, Sulfonate von ethoxylierten Alkylphenolen, Sulfonate von alkoxylierten Arylphenolen, Sulfonate von kondensierten Naphthalinen, Sulfonate von Dodecyl- und Tridecylbenzolen, Sulfonate von Naphthalinen und Alkylnaphthalinen, Sulfosuccinate oder Sulfosuccinamate. Beispiele für Sulfate sind Sulfate von Fettsäuren und Ölen, von ethoxylierten Alkylphenolen, von Alkoholen, von ethoxylierten Alkoholen oder von Fettsäureestern. Beispiele für Phosphate sind Phosphatester. Beispiele für Carboxylate sind Alkylcarboxylate sowie carboxylierte Alkohol- oder Alkylphenolethoxylate. Ebenfalls geeignet ist die Gruppe der anionischen Emulgatoren der Alkalimetall-, Erdalkalimetall- und Ammoniumsalze der Polystyrolsulfonsäuren, Salze der Polyvinylsulphonsäuren, Salze der Alkylnaphthalinsulphonsäuren, Salze von Alkylnaphthalinsulphonsäure-Formaldehyd Kondensationsprodukte, Salze von Kondensationsprodukte der Naphthalinsulphonsäure, Phenolsulphonsäure und Formaldehyd. Beispiele sind Kalziumdodecylbenzensulfonat wie Rhodocal^{®} 70/B (Solvay), Phenylsulfonat CA100 (Clariant) oder Isopropylammoniumdodecylbenzenesulfonate wie Atlox^{®} 3300B (Croda).

Weitere typische Vertreter sind unter anderem Phenylsulfonat CA (Ca-Dodecylbenzolsulfonat), Soprophor^{®}-Typen (gegebenenfalls veresterte Derivate von Tristyrylphenol-Ethoxylaten), Emulsogen^{®} 3510 (alkyliertes EO/PO Copolymerisat), Emulsogen^{®} EL 400 (ethoxyliertes Ricinusöl), Tween^{®}-Typen (fettacylierte Sorbitan-Ethoxylate), Calsogen^{®} AR 100 (Ca-Dodecylbenzolsulfonat). Bevorzugt sind Kombinationen aus Salzen alkylierter aromatischer Sulfonsäuren, wie Phenylsulfonat Ca und/oder Calsogen^{®} AR 100, mit alkylierten Copolymerisaten aus Ethylen- und Propylenoxid, wie Emulsogen^{®} 3510. Besonders bevorzugt sind Kombinationen aus Salzen der Dodecylbenzolsulfonsäure, wie Calsogen^{®} AR 100 mit alkyliertem Copolymerisat aus Ethylen- und Propylenoxid, wie Emulsogen^{®} 3510.

Beispiele für weitere anionische Emulgatoren b1) aus der Gruppe der Naphthalinsulfonate sind Galoryl^{®} MT 800 (Natrium-Dibutylnaphthalinsulfonsäure), Morwet^{®} IP (Natriumdiisopropylnaphthalinsulfonat) und Nekal^{®} BX (Alkylnaphthalinsulfonat). Beispiele für anionische Tenside aus der Gruppe der Kondensationsprodukte von Naphthalinsulfonaten mit Formaldehyd sind Galoryl^{®} DT 201 (Naphthalinsulfonsäure Hydroxypolymer mit Formaldeyd und Methylphenol Natriumsalz), Galoryl^{®} DT 250 (Kondensationsprodukt aus Phenol- und Naphthalinsulfonaten), Reserve^{®} C (Kondensationsprodukt aus Phenol- und Naphthalinsulfonaten) oder Morwet^{®} D-425, Tersperse^{®} 2020. Bevorzugt sind 1,2 mit Di-Butyl- oder Di-Isobutyl-substituierte Naphthalinsulfonate, wie z.B. Produkte wie Galoryl^{®} MT 800 (CFPI-Nufarm) und Nekal^{®} BX (BASF). Weitere typische Tenside sind Soprophor^{®} 3D33, Soprophor^{®} 4D384, Soprophor^{®} BSU, Soprophor^{®} CY/8 (Solvay) und Hoe^{®} S3474 und in Form der Sapogenat^{®} T-Produkte (Clariant), beispielsweise Sapogenat^{®} T 100.

Als nichtionische Dispergiermittel b2) wie Emulgatoren, Netzmittel, Tenside und Dispergatoren kommen übliche, in Formulierungen von agrochemischen Wirkstoffen vorhandene oberflächenative Substanzen in Frage. Beispielhaft genannt seien ethoxylierte Nonylphenole, Umsetzungsprodukte von linearen oder verzweigten Alkoholen mit Ethylenoxid und/oder Propylenoxid, Ethylenoxid-Propylenoxid-Blockcopolymere, Endgruppen-verschlossene und nicht Endgruppen-verschlossene alkoxylierte lineare und verzweigte, gesättigte und ungesättigte Alkohole (z.B. Butoxypolyethylenpropylenglycole), Umsetzungsprodukte von Alkylphenolen mit Ethylenoxid und/oder Propylenoxid, Ethylenoxid-Propylenoxid-Blockcopolymere, Polyethylenglykole und Polypropylenglykole, weiterhin Fettsäureester, Fettsäurepolyglykoletherester, Alkylsulfonate, Alkylsulfate, Arylsulfate, ethoxylierte Arylalkylphenole, wie zum Beispiel Tristyryl-phenol-ethoxylat mit durchschnittlich 16 Ethylenoxid-Einheiten pro Molekül, weiterhin ethoxylierte und propoxylierte Arylalkylphenole sowie sulfatierte oder phosphatierte Arylalkylphenol-ethoxylate bzw. -ethoxy- und -propoxylate. Besonders bevorzugt sind Tristryl-phenolalkoxylate und Fettsäurepolyglykoletherester. Ganz besonders bevorzugt sind Tristyryl-phenolethoxylate, Tristyryl-phenol-ethoxy-propoxylate und Ricinusölpolyglykoletherestern, jeweils einzeln oder in Mischungen. Hinzu kommen gegebenenfalls Additive, wie Tenside oder Ester von Fettsäuren, die zur Verbesserung der biologischen Wirksamkeit beitragen. Geeignete nichtionische Emulgatoren b2) sind beispielsweise Soprophor^{®} 796/P, Lucramul^{®} CO30, Lucramul^{®} HOT, Lucramul^{®} PSI 100 oder Synperonic^{®} T304.

Geeignete nicht-ionische Dispergatoren b2) können ebenfalls ausgewählt werden aus der Gruppe enthaltend Polyvinylpyrrolidon (PVP), Polyvinylalkohol, Co-Polymer aus PVP und Dimethylaminoethylmethacrylat, butyliertes PVP, Co-Polymer aus Vinylchlorid und Vinylacetat, und partiell hydrolysiertem Vinylacetat, Phenolharze, modifizierte Cellulose Typen wie beispielsweise Luviskol^{®} (Polyvinylpyrrolidon), Mowiol^{®} (Polyvinylalkohol) oder modifizierte Cellulose. Bevorzugt sind Polyvinylpyrrolidon-Typen, besonders bevorzugt sind Typen von niedrigem Molekulargewicht wie Luviskol^{®} K30 oder Sokalan^{®} K30.

Als weitere nicht-ionische Emulgatoren b2) aus der Gruppe der Di- und Tri-block-copolymere aus Alkylenoxiden kommen z.B. Verbindungen in Frage, die auf Basis von Ethylen- und Propylenoxid aufgebaut sind, mit mittleren Molmassen zwischen 200 und 10000, bevorzugt 1000 bis 4000 g/mol, wobei der Massenanteil des polyethoxylierte Blocks zwischen 10 und 80% variiert, wie z.B. Synperonic^{®} PE-Reihe (Uniqema), Pluronic^{®} PE-Reihe (BASF), VOP^{®} 32- oder Genapol^{®} PF-Reihe (Clariant).

Der Anteil der benötigten anionischen Dispergierhilfsmittel b1) in den erfindungsgemäßen Technischen Konzentraten beträgt 2 bis 35 Gew.-%, bevorzugt 3 bis 30 Gew.-%, bevorzugt 5 bis 25 Gew.-% und ganz besonders bevorzugt 10 bis 20 Gew.%.

Der Anteil der benötigten anionischen Dispergierhilfsmittel b1) in den erfindungsgemäßen Suspensionskonzentraten beträgt 0,1 bis 10 Gew.-%, bevorzugt 0,2 bis 7 Gew.-% und ganz besonders bevorzugt 0,3 bis 4 Gew.-%.

Der Anteil der benötigten nicht-ionischen Dispergierhilfsmittel b2) in den erfindungsgemäßen Suspensionskonzentraten beträgt 1 bis 15 Gew.-%, bevorzugt 2 bis 10 Gew.-% und ganz besonders bevorzugt 2,5 bis 8 Gew.-%.

Weiterhin beschrieben sind lösemittelfreie, wasserdispergierbare Technische Konzentrate (TK`s) enthaltend
- ein oder mehrere Wirkstoffe a) mit einem Schmelztemperaturbereich zwischen 50 und 80°C,
- ein oder mehrere anionische Emulgatoren b1),
- ein oder mehrere nichtionische Emulgatoren b2),
- mindestens ein oder mehrere Trägermaterialien c1) und
- mindestens ein Füllstoff c2).

Ebenfalls beschrieben sind lösungsmittelfreie, wasserdispergierbare Suspensionskonzentrate (SC's) enthaltend
- ein oder mehrere Wirkstoffe a) mit einem Schmelztemperaturbereich zwischen 50 und 80°C,
- ein oder mehrere anionische Emulgatoren b1),
- ein oder mehrere nichtionische Emulgatoren b2),
- ein Trägermaterial c1) und
- mindestens ein oder mehrere Verdicker d).

Geeignete Trägermaterialien c1) sind ausgewählt aus der Gruppe der hochsaugfähigen Träger mit einer Aufnahmefähigkeit von wenigstens 200 g Dibutylphthalat pro 100 g Trägermaterial.

Erfindungsgemäße hochsaugfähige Träger c1) sind Kieselsäuren wie beispielsweise Sipernat^{®}-Typen (synthetische Fällungskieselsäure von hoher Saugfähigkeit) sowie pyrogene Kieselsäure (Aerosil^{®} Typen). Bevorzugt ist Fällungskieselsäure.

Der Anteil der benötigten Füllstoffe c1) in den erfindungsgemäßen TK's beträgt 0,1 bis 10 Gew.-% , bevorzugt 0,3 bis 8 Gew.-% und ganz besonders bevorzugt 1 bis 7 Gew.-% betragen.

Der Anteil der benötigten Füllstoffe c1) in den erfindungsgemäßen SC's beträgt 0,05 bis 10 Gew.-%, bevorzugt 0,1 bis 8 Gew.-%, bevorzugt 0,3 bis 5 und ganz besonders bevorzugt 0,5 bis 3 Gew.%.

Die Füllstoffe c2) in den erfindungsgemäßen WG's oder TK's sind ausgewählt aus der Gruppe enthaltend Mineralien, Carbonate, Sulfate und Phosphate von Erdalkali- und Alkalimetallen, wie Calciumcarbonat, polymere Kohlenhydrate, Gerüstsilikate, wie Fällungskieselsäuren mit geringer Saugfähigkeit und natürliche Gerüstsilikate, wie Kaolin. Typische Vertreter geeigneter Füllstoffe c2) sind beispielsweise Agsorb^{®} LVM^{®}-GA (Attapulgit), Harborlite^{®} 300 (Perlit), Collys^{®} HV (modifizierte Stärke), Omya^{®}-Kreide (Calciumcarbonat), Kaolin^{®} Tec 1 (Kaolin, Aluminiumhydrosilicat), Steamic^{®} OOS (Talk, Magnesiumsilicat). Bevorzugt für c2) sind hier natürliche Gerüstsilikate und Calciumcarbonat-Typen wie Omya^{®}-Kreide (Calciumcarbonat), Kaolin Tec 1^{®} (Kaolin) und Harborlite^{®} 300 (Perlit), besonders bevorzugt natürliche Gerüstsilikate wie Kaolin^{®}, Tec^{®} 1 (Kaolin, Aluminiumhydrosilicat) und Harborlite^{®} 300 (Perlit). Ganz besonders bevorzugt werden für c2) Kaolin und Calciumcarbonat verwendet.

Der Anteil der benötigten Füllstoffe c2) in den erfindungsgemäßen TK's oder WG's beträgt 2 bis 35 Gew.-%, bevorzugt 3 bis 30 Gew.-%, bevorzugt 5 bis 25 Gew.-% und ganz besonders bevorzugt 10 bis 20 Gew.%.

Als Verdicker d) kommen organische Verdicker d1) sowie anorganische Verdicker d2) in Frage.

Organische Verdicker d1) kommen als organisch natürliche bzw. biotechnologisch modifizierte oder organisch synthetische Verdicker in Frage. Typische synthetische Verdicker sind Rheostrux^{®} (Croda), Thixin^{®}- oder Thixatrol^{®}-Reihe (Elementis). Diese sind typischerweise auf Basis von Acrylaten. Typische organische Verdicker sind auf Basis von Xanthan oder Cellulose (wie etwa Hydroxyethyl oder Carboxymethylcellulose) oder einer Kombination davon. Weitere typische Vertreter sind auf Basis von Lignin (wie Ligninsulfonate, Borresperse^{®}NA, REAX^{®} 88 oder Kraftsperse 25 S). Bevorzugt werden natürliche modifzierte Verdicker auf Basis von Xanthan verwendet. Typische Vertreter sind beispielsweise Rhodopol^{®} (Solvay) und Kelzan^{®} (Kelco Corp.) sowie Satiaxane^{®} (Cargill).

Der Anteil der organischen Verdicker d1) in den erfindungsgemäßen SC's beträgt kleiner gleich 5 Gew.-%, bevorzugt 0,01 bis 1,0 Gew.-%, besonders bevorzugt 0,01 bis 0,6 Gew.-%, ganz besonders bevorzugt 0,05 bis 0,5 Gew.-% und ganz besonders bevorzugt 0,1 bis 0,3 Gew.-*%*.

Als anorganische Verdicker d2) geeignet sind beispielsweise modifizierte natürliche Silikate, wie chemisch modifizierte Bentonite, Hectorite, Attapulgite, Montmorillonite, Smektite oder andere Silikatmineralien, wie Bentone^{®} (Elementis), Attagel^{®} (Engelhard), Agsorb^{®} (Oil-Dri Corporation) oder Hectorite^{®} (Akzo Nobel) oder der Van Gel-Reihe (R.T. Vanderbilt).

Der Anteil anorganischer Verdicker d2) in den erfindungsgemäßen SC's beträgt bis 0 bis 5 Gew.-%, bevorzugt 0,1 bis 3 Gew.-%, besonders bevorzugt 0,2 bis 1,5 Gew.-%, ganz besonders bevorzugt 0,3 bis 1,5 Gew.-% und ganz besonders bevorzugt 0,4 bis 1,3 Gew.-%..

Bevorzugt wird eine Mischung aus Verdicker d1) und d2) eingesetzt. Besonders bevorzugt werden ausschließlich organische Verdicker d1) eingesetzt. Ganz besonders bevorzugt sind solche Verdicker d1) auf Basis von Xanthan (wie Rhodopol^{®} G von Solvay).

Als gegebenenfalls zugesetzte von Komponente a) verschiedene agrochemische Wirkstoffe (Komponenten e) sind geeignet Herbizide, Fungizide, Insektizide, Pflanzenwachstums-regulatoren, Safener und dergleichen.

Fungizide Wirkstoffe sind z.B. 1) Inhibitoren der Ergosterol-Biosynthese, beispielsweise (1.001) Cyproconazol, (1.002) Difenoconazol, (1.003) Epoxiconazol, (1.004) Fenhexamid, (1.005) Fenpropidin, (1.006) Fenpropimorph, (1.007) Fenpyrazamin, (1.008) Fluquinconazol, (1.009) Flutriafol, (1.010) Imazalil, (1.011) Imazalil Sulfat, (1.012) Ipconazol, (1.013) Metconazol, (1.014) Myclobutanil, (1.015) Paclobutrazol, (1.016) Prochloraz, (1.017) Propiconazol, (1.018) Prothioconazol, (1.019) Pyrisoxazol, (1.020) Spiroxamin, (1.021) Tebuconazol, (1.022) Tetraconazol, (1.023) Triadimenol, (1.024) Tridemorph, (1.025) Triticonazol, (1.026) (1R,2S,5S)-5-(4-Chlorbenzyl)-2-(chlormethyl)-2-methyl-1-(1H-1,2,4-triazol-1-ylmethyl)cyclopentanol, (1.027) (1S,2R,5R)-5-(4-Chlorbenzyl)-2-(chlormethyl)-2-methyl-1-(1H-1,2,4-triazol-1-ylmethyl)cyclopentanol, (1.028) (2R)-2-(1-Chlorcyclopropyl)-4-[(1R)-2,2-dichlorcyclopropyl]-1-(1H-1,2,4-triazol-1-yl)butan-2-ol (1.029) (2R)-2-(1-Chlorcyclopropyl)-4-[(1S)-2,2-dichlorcyclopropyl]-1-(1H-1,2,4-triazol-1-yl)butan-2-ol, (1.030) (2R)-2-[4-(4-Chlorphenoxy)-2-(trifluormethyl)phenyl]-1-(1H-1,2,4-triazol-1-yl)propan-2-ol, (1.031) (2S)-2-(1-Chlorcyclopropyl)-4-[(1R)-2,2-dichlorcyclopropyl]-1-(1H-1,2,4-triazol-1 -yl)butan-2-ol, (1.032) (2S)-2-(1-Chlorcyclopropyl)-4-[(1S)-2,2-dichlorcyclopropyl]-1-(1H-1,2,4-triazol-1-yl)butan-2-ol, (1.033) (2S)-2-[4-(4-Chlorphenoxy)-2-(trifluormethyl)phenyl]-1-(1H-1,2,4-triazol-1-yl)propan-2-ol, (1.034) (R)-[3-(4-Chlor-2-fluorphenyl)-5-(2,4-difluorphenyl)-1,2-oxazol-4-yl](pyridin-3-yl)methanol, (1.035) (S)-[3-(4-Chlor-2-fluorphenyl)-5-(2,4-difluorphenyl)-1,2-oxazol-4-yl](pyridin-3-yl)methanol, (1.036) [3-(4-Chlor-2-fluorphenyl)-5-(2,4-difluorphenyl)-1,2-oxazol-4-yl](pyridin-3-yl)methanol, (1.037) 1-({(2R,4S)-2-[2-Chlor-4-(4-chlorphenoxy)phenyl] -4-methyl-1,3-dioxolan-2-yl} methyl)-1H-1,2,4-triazol, (1.038) 1-({(2S,4S)-2-[2-Chlor-4-(4-chlorphenoxy)phenyl]-4-methyl-1,3-dioxolan-2-yl}methyl)-1H-1,2,4-triazol, (1.039) 1- {[3-(2-Chlorphenyl)-2-(2,4-difluorphenyl)oxiran-2-yl]methyl}-1H-1 ,2,4-triazol-5-yl-thiocyanat, (1.040) 1-{[rel(2R,3R)-3-(2-Chlorphenyl)-2-(2,4-difluorphenyl)oxiran-2-yl]methyl}-1H-1,2,4-triazol-5-yl-thiocyanat, (1.041) 1-{[rel(2R,3S)-3-(2-Chlorphenyl)-2-(2,4-difluorphenyl)oxiran-2-yl]methyl}-1H-1,2,4-triazol-5-yl-thiocyanat, (1.042) 2-[(2R,4R,5R)-1-(2,4-Dichlorphenyl)-5-hydroxy-2,6,6-trimethylheptan-4-yl]-2,4-dihydro-3H-1,2,4-triazol-3-thion, (1.043) 2-[(2R,4R,5S)-1-(2,4-Dichlorphenyl)-5-hydroxy-2,6,6-trimethylheptan-4-yl]-2,4-dihydro-3H-1,2,4-triazol-3-thion, (1.044) 2-[(2R,4S,5R)-1-(2,4-Dichlorophenyl)-5-hydroxy-2,6,6-trimethylheptan-4-yl]-2,4-dihydro-3H-1,2,4-triazol-3-thion, (1.045) 2-[(2R,4S,SS)-1-(2,4-Dichlorphenyl)-5-hydroxy-2,6,6-trimethylheptan-4-yl]-2,4-dihydro-3H-1,2,4-triazol-3-thion, (1.046) 2-[(2S,4R,5R)-1-(2,4-Dichlorphenyl)-5-hydroxy-2,6,6-trimethylheptan-4-yl]-2,4-dihydro-3H-1,2,4-triazol-3-thion, (1.047) 2-[(2S,4R,5S)-1-(2,4-Dichlorphenyl)-5-hydroxy-2,6,6-trimethylheptan-4-yl]-2,4-dihydro-3H-1,2,4-triazol-3-thion, (1.048) 2-[(2S,4S,5R)-1-(2,4-Dichlorphenyl)-5-hydroxy-2,6,6-trimethylheptan-4-yl]-2,4-dihydro-3H-1,2,4-triazol-3-thion, (1.049) 2-[(2S,4S,5S)-1-(2,4-Dichlorphenyl)-5-hydroxy-2,6,6-trimethylheptan-4-yl]-2,4-dihydro-3H-1,2,4-triazol-3-thion, (1.050) 2-[1-(2,4-Dichlorphenyl)-5-hydroxy-2,6,6-trimethylheptan-4-yl]-2,4-dihydro-3H-1,2,4-triazol-3-thion, (1.051) 2-[2-Chlor-4-(2,4-dichlorophenoxy)phenyl]-1-(1H-1,2,4-triazol-1-yl)propan-2-ol, (1.052) 2-[2-Chlor-4-(4-chlorphenoxy)phenyl]-1-(1H-1,2,4-triazol-1-yl)butan-2-ol, (1.053) 2-[4-(4-Chlorphenoxy)-2-(trifluormethyl)phenyl]-1-(1H-1,2,4-triazol-1-yl)butan-2-ol, (1.054) 2- [4-(4-Chlorphenoxy)-2-(trifluormethyl)phenyl]-1-(1H-1,2,4-triazol-1-yl)pentan-2-ol, (1.055) 2-[4-(4-Chlorphenoxy)-2-(trifluormethyl)phenyl]-1-(1H-1,2,4-triazol-1-yl)propan-2-ol, (1.056) 2-{ [3-(2-Chlorphenyl)-2-(2,4-difluorphenyl)oxiran-2-yl]methyl}-2,4-dihydro-3H-1,2,4-triazol-3-thion, (1.057) 2-{[rel(2R,3R)-3-(2-Chlorphenyl)-2-(2,4-difluorphenyl)oxiran-2-yl]methyl}-2,4-dihydro-3H-1,2,4-triazol-3-thion, (1.058) 2-{[rel(2R,3S)-3-(2-Chlorphenyl)-2-(2,4-difluorphenyl)oxiran-2-yl]methyl}-2,4-dihydro-3H-1,2,4-triazol-3-thion, (1.059) 5-(4-Chlorbenzyl)-2-(chlormethyl)-2-methyl-1-(1H-1,2,4-triazol-1-ylmethyl)cyclopentanol, (1.060) 5-(Allylsulfanyl)-1-{[3-(2-chlorphenyl)-2-(2,4-difluorphenyl)oxiran-2-yl]methyl}-1H-1,2,4-triazol, (1.061) 5-(Allylsulfanyl)-1-{[rel(2R,3R)-3-(2-chlorphenyl)-2-(2,4-difluorphenyl)oxiran-2-yl]methyl}-1H-1,2,4-triazol, (1.062) 5-(Allylsulfanyl)-1-{[rel(2R,3S)-3-(2-chlorphenyl)-2-(2,4-difluorphenyl)oxiran-2-yl]methyl}-1H-1,2,4-triazol, (1.063) N'-(2,5-Dimethyl-4-{[3-(1,1,2,2-tetrafluorethoxy)phenyl]sulfanyl}phenyl)-N-ethyl-N-methylimidoformamid, (1.064) N'-(2,5-Dimethyl-4-{[3-(2,2,2-trifluorethoxy)phenyl]sulfanyl}phenyl)-N-ethyl-N-methylimidoformamid, (1.065) N'-(2,5-Dimethyl-4-{ [3-(2,2,3,3-tetrafluorpropoxy)phenyl]sulfanyl}phenyl)-N-ethyl-N-methylimidoformamid, (1.066) N'-(2,5-Dimethyl-4-{ [3-(pentafluorethoxy)phenyl]sulfanyl}phenyl)-N-ethyl-N-methylimidoformamid, (1.067) N'-(2,5-Dimethyl-4-{3-[(1,1,2,2-tetrafluorethyl)sulfanyl]phenoxy}phenyl)-N-ethyl-N-methylimidoformamid, (1.068) N'-(2,5-Dimethyl-4-{3-[(2,2,2-trifluorethyl)sulfanyl]phenoxy}phenyl)-N-ethyl-N-methylimidoformamid, (1.069) N'-(2,5-Dimethyl-4-{3-[(2,2,3,3-tetrafluorpropyl)sulfanyl]phenoxy}phenyl)-N-ethyl-N-methylimidoformamid, (1.070) N'-(2,5-Dimethyl-4-{3-[(pentafluorethyl)sulfanyl]phenoxy}phenyl)-N-ethyl-N-methylimidoformamid, (1.071) N'-(2,5-Dimethyl-4-phenoxyphenyl)-N-ethyl-N-methylimidoformamid, (1.072) N'-(4-{ [3-(Difluormethoxy)phenyl]sulfanyl}-2,5-dimethylphenyl)-N-ethyl-N-methylimidoformamid, (1.073) N'-(4-{ 3-[(Difluormethyl)sulfanyl]phenoxy }-2,5-dimethylphenyl)-N-ethyl-N-methylimidoformamid, (1.074) N'-[5-Brom-6-(2,3-dihydro-1H-inden-2-yloxy)-2-methylpyridin-3-yl]-N-ethyl-N-methylimidoformamid, (1.075) N'-{4-[(4,5-Dichlor-1,3-thiazol-2-yl)oxy]-2,5-dimethylphenyl}-N-ethyl-N-methylimidoformamid, (1.076) N'-{5-Brom-6-[(1R)-1-(3,5-difluorophenyl)ethoxy]-2-methylpyridin-3-yl} -N-ethyl-N-methylimidoformamid, (1.077) N'-{5-Brom-6-[(1S)-1-(3,5-difluorphenyl)ethoxy]-2-methylpyridin-3-yl}-N-ethyl-N-methylimidoformamid, (1.078) N'-{5-Brom-6-[(cis-4-isopropylcyclohexyl)oxy] -2-methylpyridin-3-yl} -N-ethyl-N-methylimidoformamid, (1.079) N'- {5-Brom-6-[(trans-4-isopropylcyclohexyl)oxy]-2-methylpyridin-3-yl}-N-ethyl-N-methylimidoformamid, (1.080) N'-{5-Bromo-6-[1-(3 ,5-difluorphenyl)ethoxy] -2-methylpyridin-3-yl} -N-ethyl-N-methylimidoformamid, (1.081) Mefentrifluconazole, (1.082) Ipfentrifluconazole.
2) Inhibitoren der Atmungskette am Komplex I oder II beispielsweise (2.001) Benzovindiflupyr, (2.002) Bixafen, (2.003) Boscalid, (2.004) Carboxin, (2.005) Fluopyram, (2.006) Flutolanil, (2.007) Fluxapyroxad, (2.008) Furametpyr, (2.009) Isofetamid, (2.010) Isopyrazam (anti-epimeres Enantiomer 1R,4S,9S), (2.011) Isopyrazam (anti-epimeres Enantiomer 1S,4R,9R), (2.012) Isopyrazam (anti-epimeres Racemat 1RS,4SR,9SR), (2.013) Isopyrazam (Mischung des syn-epimeren Razemates 1RS,4SR,9RS und des anti-epimeren Razemates 1RS,4SR,9SR), (2.014) Isopyrazam (syn-epimeres Enantiomer 1R,4S,9R), (2.015) Isopyrazam (syn-epimeres Enantiomer 1S,4R,9S), (2.016) Isopyrazam (syn-epimeres Racemat 1RS,4SR,9RS), (2.017) Penflufen, (2.018) Penthiopyrad, (2.019) Pydiflumetofen, (2.020) Pyraziflumid, (2.021) Sedaxane, (2.022) 1,3-Dimethyl-N-(1,1,3-trimethyl-2,3-dihydro-1H-inden-4-yl)-1H-pyrazol-4-carboxamid, (2.023) 1,3-Dimethyl-N-[(3R)-1,1,3-trimethyl-2,3-dihydro-1H-inden-4-yl]-1H-pyrazol-4-carboxamid, (2.024) 1,3-Dimethyl-N-[(3S)-1,1,3-trimethyl-2,3-dihydro-1H-inden-4-yl]-1H-pyrazol-4-carboxamid, (2.025) 1-Methyl-3-(trifluormethyl)-N-[2'-(trifluormethyl)biphenyl-2-yl]-1H-pyrazol-4-carboxamid, (2.026) 2-Fluor-6-(trifluoromethyl)-N-(1,1,3-trimethyl-2,3-dihydro-1H-inden-4-yl)benzamid, (2.027) 3-(Difluormethyl)-1-methyl-N-(1,1,3-trimethyl-2,3-dihydro-1H-inden-4-yl)-1H-pyrazol-4-carboxamid, (2.028) 3-(Difluormethyl)-1-methyl-N-[(3R)-1,1,3-trimethyl-2,3-dihydro-1H-inden-4-yl]-1H-pyrazol-4-carboxamid, (2.029) 3-(Difluormethyl)-1-methyl-N-[(3S)-1,1,3-trimethyl-2,3-dihydro-1H-inden-4-yl]-1H-pyrazol-4-carboxamid, (2.030) 3-(Difluormethyl)-N-(7-fluor-1,1,3-trimethyl-2,3-dihydro-1H-inden-4-yl)-1-methyl-1H-pyrazol-4-carboxamid, (2.031) 3-(Difluormethyl)-N-[(3R)-7-fluor-1,1,3-trimethyl-2,3-dihydro-1H-inden-4-yl]-1-methyl-1H-pyrazol-4-carboxamid, (2.032) 3-(Difluoromethyl)-N-[(3S)-7-fluor-1,1,3-trimethyl-2,3-dihydro-1H-inden-4-yl]-1-methyl-1H-pyrazol-4-carboxamid, (2.033) 5,8-Difluor-N-[2-(2-fluor-4-{ [4-(trifluormethyl)pyridin-2-yl]oxy}phenyl)ethyl]quinazolin-4-amin, (2.034) N-(2-Cyclopentyl-5-fluorbenzyl)-N-cyclopropyl-3-(difluormethyl)-5-fluor-1-methyl-1H-pyrazol-4-carboxamid, (2.035) N-(2-tert-Butyl-5-methylbenzyl)-N-cyclopropyl-3-(difluormethyl)-5-fluor-1-methyl-1H-pyrazol-4-carboxamid, (2.036) N-(2-tert-Butylbenzyl)-N-cyclopropyl-3-(difluormethyl)-5-fluor-1-methyl-1H-pyrazol-4-carboxamid, (2.037) N-(5-Chlor-2-ethylbenzyl)-N-cyclopropyl-3-(difluormethyl)-5-fluor-1-methyl-1H-pyrazol-4-carboxamid, (2.038) N-(5-Chlor-2-isopropylbenzyl)-N-cyclopropyl-3-(difluormethyl)-5-fluor-1-methyl-1H-pyrazol-4-carboxamid, (2.039) N-[(1R,4S)-9-(Dichlormethylen)-1,2,3,4-tetrahydro-1,4-methanonaphthalen-5-yl]-3-(difluormethyl)-1-methyl-1H-pyrazol-4-carboxamid, (2.040) N-[(1S,4R)-9-(Dichlormethylen)-1,2,3,4-tetrahydro-1,4-methanonaphthalen-5-yl]-3-(difluormethyl)-1-methyl-1H-pyrazol-4-carboxamid, (2.041) N-[1-(2,4-Dichlorphenyl)-1-methoxypropan-2-yl]-3-(difluormethyl)-1-methyl-1H-pyrazol-4-carboxamid, (2.042) N-[2-Chlor-6-(trifluormethyl)benzyl]-N-cyclopropyl-3-(difluormethyl)-5-fluor-1-methyl-1H-pyrazol-4-carboxamid, (2.043) N-[3-Chlor-2-fluor-6-(trifluormethyl)benzyl]-N-cyclopropyl-3-(difluormethyl)-5-fluor-1-methyl-1H-pyrazol-4-carboxamid, (2.044) N-[5-Chlor-2-(trifluormethyl)benzyl]-N-cyclopropyl-3-(difluormethyl)-5-fluor-1-methyl-1H-pyrazol-4-carboxamid, (2.045) N-Cyclopropyl-3-(difluormethyl)-5-fluor-1-methyl-N-[5-methyl-2-(trifluormethyl)benzyl]-1H-pyrazol-4-carboxamid, (2.046) N-Cyclopropyl-3-(difluormethyl)-5-fluor-N-(2-fluor-6-isopropylbenzyl)-1-methyl-1H-pyrazol-4-carboxamid, (2.047) N-Cyclopropyl-3-(difluormethyl)-5-fluor-N-(2-isopropyl-5-methylbenzyl)-1-methyl-1H-pyrazol-4-carboxamid, (2.048) N-Cyclopropyl-3-(difluormethyl)-5-fluor-N-(2-isopropylbenzyl)-1-methyl-1H-pyrazol-4-carbothioamid, (2.049) N-Cyclopropyl-3-(difluoromethyl)-5-fluor-N-(2-isopropylbenzyl)-1-methyl-1H-pyrazol-4-carboxamid, (2.050) N-Cyclopropyl-3-(difluormethyl)-5-fluor-N-(5-fluor-2-isopropylbenzyl)-1-methyl-1H-pyrazol-4-carboxamid, (2.051) N-Cyclopropyl-3-(difluormethyl)-N-(2-ethyl-4,5-dimethylbenzyl)-5-fluor-1-methyl-1H-pyrazol-4-carboxamid, (2.052) N-Cyclopropyl-3-(difluormethyl)-N-(2-ethyl-5-fluorbenzyl)-5-fluor-1-methyl-1H-pyrazol-4-carboxamid, (2.053) N-Cyclopropyl-3-(difluormethyl)-N-(2-ethyl-5-methylbenzyl)-5-fluor-1-methyl-1H-pyrazole-4-carboxamid, (2.054) N-Cyclopropyl-N-(2-cyclopropyl-5-fluorbenzyl)-3-(difluormethyl)-5-fluor-1-methyl-1H-pyrazole-4-carboxamid, (2.055) N-Cyclopropyl-N-(2-cyclopropyl-5-methylbenzyl)-3-(difluormethyl)-5-fluor-1-methyl-1H-pyrazole-4-carboxamid, (2.056) N-Cyclopropyl-N-(2-cyclopropylbenzyl)-3-(difluormethyl)-5-fluor-1-methyl-1H-pyrazole-4-carboxamid.
3) Inhibitoren der Atmungskette am Komplex III, beispielsweise (3.001) Ametoctradin, (3.002) Amisulbrom, (3.003) Azoxystrobin, (3.004) Coumethoxystrobin, (3.005) Coumoxystrobin, (3.006) Cyazofamid, (3.007) Dimoxystrobin, (3.008) Enoxastrobin, (3.009) Famoxadon, (3.010) Fenamidon, (3.011) Flufenoxystrobin, (3.012) Fluoxastrobin, (3.013) Kresoxim-Methyl, (3.014) Metominostrobin, (3.015) Orysastrobin, (3.016) Picoxystrobin, (3.017) Pyraclostrobin, (3.018) Pyrametostrobin, (3.019) Pyraoxystrobin, (3.020) Trifloxystrobin (3.021) (2E)-2-{2-[({[(1E)-1-(3-{[(E)-1-Fluor-2-phenylvinyl]oxy }phenyl)ethyliden] amino}oxy)methyl]phenyl}-2-(methoxyimino)-N-methylacetamid, (3.022) (2E,3Z)-5-{[1-(4-Chlorphenyl)-1H-pyrazol-3-yl]oxy}-2-(methoxyimino)-N,3-dimethylpent-3-enamid, (3.023) (2R)-2-{2-[(2,5-Dimethylphenoxy)methyl]phenyl}-2-methoxy-N-methylacetamid, (3.024) (2S)-2-{2-[(2,5-Dimethylphenoxy)methyl]phenyl}-2-methoxy-N-methylacetamid, (3.025) (3S,6S,7R,8R)-8-Benzyl-3-[({3-[(isobutyryloxy)methoxy]-4-methoxypyridin-2-yl}carbonyl)amino]-6-methyl-4,9-dioxo-1,5-dioxonan-7-yl-2-methylpropanoat, (3.026) 2-{2-[(2,5-Dimethylphenoxy)methyl]phenyl}-2-methoxy-N-methylacetamid, (3.027) N-(3-Ethyl-3,5,5-trimethylcyclohexyl)-3-formamido-2-hydroxybenzamid, (3.028) (2E,3Z)-5-{[1-(4-Chlor-2-fluorphenyl)-1H-pyrazol-3-yl]oxy}-2-(methoxyimino)-N,3-dimethylpent-3-enamid, (3.029) Methyl {5-[3-(2,4-dimethylphenyl)-1H-pyrazol-1-yl] -2-methylbenzyl} carbamate.
4) Inhibitoren der Mitose und Zellteilung, beispielsweise (4.001) Carbendazim, (4.002) Diethofencarb, (4.003) Ethaboxam, (4.004) Fluopicolid, (4.005) Pencycuron, (4.006) Thiabendazol, (4.007) Thiophanat-Methyl, (4.008) Zoxamid, (4.009) 3-Chlor-4-(2,6-difluorphenyl)-6-methyl-5-phenylpyridazin, (4.010) 3-Chlor-5-(4-chlorphenyl)-4-(2,6-difluorphenyl)-6-methylpyridazin, (4.011) 3-Chlor-5-(6-chlorpyridin-3-yl)-6-methyl-4-(2,4,6-trifluorphenyl)pyridazin, (4.012) 4-(2-Brom-4-fluorphenyl)-N-(2,6-difluorphenyl)-1,3-dimethyl-1H-pyrazol-5-amin, (4.013) 4-(2-Brom-4-fluorphenyl)-N-(2-brom-6-fluorphenyl)-1,3-dimethyl-1H-pyrazol-5-amin, (4.014) 4-(2-Brom-4-fluorphenyl)-N-(2-bromphenyl)-1,3-dimethyl-1H-pyrazol-5-amin, (4.015) 4-(2-Brom-4-fluorphenyl)-N-(2-chlor-6-fluorphenyl)-1,3-dimethyl-1H-pyrazol-5-amin, (4.016) 4-(2-Brom-4-fluorphenyl)-N-(2-chlorphenyl)-1,3-dimethyl-1H-pyrazol-5-amin, (4.017) 4-(2-Brom-4-fluorphenyl)-N-(2-fluorphenyl)-1,3-dimethyl-1H-pyrazol-5-amin, (4.018) 4-(2-Chlor-4-fluorphenyl)-N-(2,6-difluorphenyl)-1,3-dimethyl-1H-pyrazol-5-amin, (4.019) 4-(2-Chlor-4-fluorphenyl)-N-(2-chlor-6-fluorphenyl)-1,3-dimethyl-1H-pyrazol-5-amin, (4.020) 4-(2-Chlor-4-fluorphenyl)-N-(2-chlorphenyl)-1,3-dimethyl-1H-pyrazol-5-amin, (4.021) 4-(2-Chlor-4-fluorphenyl)-N-(2-fluorphenyl)-1,3-dimethyl-1H-pyrazol-5-amin, (4.022) 4-(4-Chlorphenyl)-5-(2,6-difluorphenyl)-3,6-dimethylpyridazin, (4.023) N-(2-Brom-6-fluorphenyl)-4-(2-chlor-4-fluorphenyl)-1,3-dimethyl-1H-pyrazol-5-amin, (4.024) N-(2-Bromphenyl)-4-(2-chlor-4-fluorphenyl)-1,3-dimethyl-1H-pyrazol-5-amin, (4.025) N-(4-Chlor-2,6-difluorphenyl)-4-(2-chlor-4-fluorphenyl)-1,3-dimethyl-1H-pyrazol-5-amin.
5) Verbindungen mit Befähigung zu Multisite-Aktivität, beispielsweise (5.001) Bordeauxmischung, (5.002) Captafol, (5.003) Captan, (5.004) Chlorthalonil, (5.005) Kupferhydroxid, (5.006) Kupfernaphthenat, (5.007) Kupferoxid, (5.008) Kupferoxychlorid, (5.009) Kupfer(2+)-sulfat, (5.010) Dithianon, (5.011) Dodin, (5.012) Folpet, (5.013) Mancozeb, (5.014) Maneb, (5.015) Metiram, (5.016) Zinkmetiram, (5.017) Kupfer-Oxin, (5.018) Propineb, (5.019) Schwefel und Schwefelzubereitungen einschließlich Calciumpolysulfid, (5.020) Thiram, (5.021) Zineb, (5.022) Ziram, (5.023) 6-Ethyl-5,7-dioxo-6,7-dihydro-5H-pyrrolo[3',4':5,6][1,4]dithiino[2,3-c][1,2]thiazole-3-carbonitrile.
6) Verbindungen, die zum Auslösen einer Wirtsabwehr befähigt sind, beispielsweise (6.001) Acibenzolar-S-Methyl, (6.002) Isotianil, (6.003) Probenazol, (6.004) Tiadinil.
7) Inhibitoren der Aminosäure- und/oder Protein-Biosynthese, beispielsweise (7.001) Cyprodinil, (7.002) Kasugamycin, (7.003) Kasugamycinhydrochlorid-hydrat, (7.004) Oxytetracyclin (7.005) Pyrimethanil, (7.006) 3-(5-Fluor-3,3,4,4-tetramethyl-3,4-dihydroisochinolin-1-yl)chinolin.
(8) Inhibitoren der ATP-Produktion, beispielsweise (8.001) Silthiofam.
9) Inhibitoren der Zellwandsynthese, beispielsweise (9.001) Benthiavalicarb, (9.002) Dimethomorph, (9.003) Flumorph, (9.004) Iprovalicarb, (9.005) Mandipropamid, (9.006) Pyrimorph, (9.007) Valifenalat, (9.008) (2E)-3-(4-tert.-Butylphenyl)-3-(2-chlorpyridin-4-yl)-1-(morpholin-4-yl)prop-2-en-1-on, (9.009) (2Z)-3-(4-tert.-Butylphenyl)-3-(2-chlorpyridin-4-yl)-1-(morpholin-4-yl)prop-2-en-1-on.
10) Inhibitoren der Lipid- und Membran-Synthese, beispielsweise (10.001) Propamocarb, (10.002) Propamocarbhydrochlorid, (10.003) Tolclofos-Methyl.
11) Inhibitoren der Melanin-Biosynthese, beispielsweise (11.001) Tricyclazol, (11.002) 2,2,2-Trifluorethyl-{3-methyl-1- [(4-methylbenzoyl)amino]butan-2-yl} carbamat.
12) Inhibitoren der Nukleinsäuresynthese, beispielsweise (12.001) Benalaxyl, (12.002) Benalaxyl-M (Kiralaxyl), (12.003) Metalaxyl, (12.004) Metalaxyl-M (Mefenoxam).
13) Inhibitoren der Signaltransduktion, beispielsweise (13.001) Fludioxonil, (13.002) Iprodion, (13.003) Procymidon, (13.004) Proquinazid, (13.005) Quinoxyfen, (13.006) Vinclozolin.
14) Verbindungen, die als Entkoppler wirken können, beispielsweise (14.001) Fluazinam, (14.002) Meptyldinocap.
15) Weitere Verbindungen, beispielsweise (15.001) Abscisinsäure, (15.002) Benthiazol, (15.003) Bethoxazin, (15.004) Capsimycin, (15.005) Carvon, (15.006) Chinomethionat, (15.007) Cufraneb, (15.008) Cyflufenamid, (15.009) Cymoxanil, (15.010) Cyprosulfamid, (15.011) Flutianil, (15.012) Fosetyl-Aluminium, (15.013) Fosetyl-Calcium, (15.014) Fosetyl-Natrium, (15.015) Methylisothiocyanat, (15.016) Metrafenon, (15.017) Mildiomycin, (15.018) Natamycin, (15.019) Nickel-Dimethyldithiocarbamat, (15.020) Nitrothal-Isopropyl, (15.021) Oxamocarb, (15.022) Oxathiapiprolin, (15.023) Oxyfenthiin, (15.024) Pentachlorphenol und Salze, (15.025) Phosphonsäure und deren Salze, (15.026) Propamocarb-fosetylat, (15.027) Pyriofenone (Chlazafenone) (15.028) Tebufloquin, (15.029) Tecloftalam, (15.030) Tolnifanide, (15.031) 1-(4-{ 4-[(5R)-5-(2,6-Difluorphenyl)-4,5-dihydro-1,2-oxazol-3-yl]-1,3-thiazol-2-yl}piperidin-1 -yl)-2-[5-methyl-3-(trifluormethyl)- 1H-pyrazol-1 -yl]ethanon, (15.032) 1-(4-{4-[(SS)-5-(2,6-Difluorphenyl)-4,5-dihydro-1,2-oxazol-3-yl]-1,3-thiazol-2-yl}piperidin-1-yl)-2-[5-methyl-3-(trifluormethyl)-1H-pyrazol-1-yl]ethanon, (15.033) 2-(6-Benzylpyridin-2-yl)quinazolin, (15.034) 2,6-Dimethyl-1H,5H-[1,4]dithiino[2,3-c:5,6-c']dipyrrol-1,3,5,7(2H,6H)-tetron, (15.035) 2-[3,5-Bis(difluormethyl)-1H-pyrazol-1-yl]-1-[4-(4-{5-[2-(prop-2-in-1-yloxy)phenyl]-4,5-dihydro-1,2-oxazol-3-yl}-1,3-thiazol-2-yl)piperidin-1-yl]ethanon, (15.036) 2-[3,5-Bis(difluormethyl)-1H-pyrazol-1-yl]-1-[4-(4-{5-[2-chlor-6-(prop-2-in-1-yloxy)phenyl]-4,5-dihydro-1,2-oxazol-3-yl}-1,3-thiazol-2-yl)piperidin-1-yl]ethanon, (15.037) 2-[3,5-Bis(difluormethyl)-1H-pyrazol-1-yl]-1-[4-(4-{5-[2-fluor-6-(prop-2-in-1-yloxy)phenyl]-4,5-dihydro-1,2-oxazol-3-yl}-1,3-thiazol-2-yl)piperidin-1-yl]ethanon, (15.038) 2-[6-(3-Fluor-4-methoxyphenyl)-5-methylpyridin-2-yl]quinazolin, (15.039) 2-{(SR)-3-[2-(1-{ [3,5-Bis(difluormethyl)-1H-pyrazol-1-yl]acetyl}piperidin-4-yl)-1,3-thiazol-4-yl]-4,5-dihydro-1,2-oxazol-5-yl}-3-chlorphenyl methanesulfonat, (15.040) 2-{(5S)-3-[2-(1-{[3,5-Bis(difluormethyl)-1H-pyrazol-1-yl]acetyl}piperidin-4-yl)-1,3-thiazol-4-yl]-4,5-dihydro-1,2-oxazol-5-yl}-3-chlorphenyl methanesulfonat, (15.041) 2-{2-[(7,8-Difluor-2-methylquinolin-3-yl)oxy]-6-fluorphenyl}propan-2-ol, (15.042) 2-{2-Fluor-6-[(8-fluor-2-methylquinolin-3-yl)oxy]phenyl}propan-2-ol, (15.043) 2-{3-[2-(1-{[3,5-Bis(difluormethyl)-1H-pyrazol-1-yl]acetyl}piperidin-4-yl)-1,3-thiazol-4-yl]-4,5-dihydro-1,2-oxazol-5-yl}-3-chlorphenyl-methansulfonat, (15.044) 2-{3-[2-(1-{[3,5-Bis(difluormethyl)-1H-pyrazol-1-yl]acetyl}piperidin-4-yl)-1,3-thiazol-4-yl]-4,5-dihydro-1,2-oxazol-5-yl}phenyl methanesulfonat, (15.045) 2-Phenylphenol und deren Salze, (15.046) 3-(4,4,5-Trifluor-3,3-dimethyl-3,4-dihydroisoquinolin-1-yl)quinolin, (15.047) 3-(4,4-Difluor-3,3-dimethyl-3,4-dihydroisoquinolin-1-yl)quinolin, (15.048) 4-Amino-5-fluorpyrimidin-2-ol (Tautomere Form: 4-Amino-5-fluorpyrimidin-2(1H)-on), (15.049) 4-Oxo-4-[(2-phenylethyl)amino]buttersäure, (15.050) 5-Amino-1,3,4-thiadiazol-2-thiol, (15.051) 5-Chlor-N'-phenyl-N'-(prop-2-yn-1-yl)thiophen-2-sulfonohydrazid, (15.052) 5-Fluor-2-[(4-fluorbenzyl)oxy]pyrimidin-4-amin, (15.053) 5-Fluor-2-[(4-methylbenzyl)oxy]pyrimidin-4-amin, (15.054) 9-Fluor-2,2-dimethyl-5-(quinolin-3-yl)-2,3-dihydro-1,4-benzoxazepin, (15.055) But-3-yn-1-yl {6-[({[(Z)-(1-methyl-1H-tetrazol-5-yl)(phenyl)methylen]amino}oxy)methyl]pyridin-2-yl}carbamat, (15.056) Ethyl (2Z)-3-amino-2-cyano-3-phenylacrylat, (15.057) Phenazin-1-carbonsäure, (15.058) Propyl 3,4,5-trihydroxybenzoat, (15.059) Quinolin-8-ol, (15.060) Quinolin-8-ol sulfat (2:1), (15.061) tert-Butyl {6-[({[(1-methyl-1H-tetrazol-5-yl)(phenyl)methylene] amino}oxy)methyl]pyridin-2-yl} carbamat, (15.062) 5-Fluor-4-imino-3-methyl-1-[(4-methylphenyl)sulfonyl]-3,4-dihydropyrimidin-2(1H)-one.Insektizide Wirkstoffe sind beispielsweise :
   (1) Acetylcholinesterase (AChE) Inhibitoren, wie beispielsweise Carbamate, z.B. Alanycarb, Aldicarb, Bendiocarb, Benfuracarb, Butocarboxim, Butoxycarboxim, Carbaryl, Carbofuran, Carbosulfan, Ethiofencarb, Fenobucarb, Formetanate, Furathiocarb, Isoprocarb, Methiocarb, Methomyl, Metolcarb, Oxamyl, Pirimicarb, Propoxur, Thiodicarb, Thiofanox, Triazamate, Trimethacarb, XMC und Xylylcarb oder organophosphate, z.B. Acephate, Azamethiphos, Azinphos-ethyl, Azinphos-methyl, Cadusafos, Chlorethoxyfos, Chlorfenvinphos, Chlormephos, Chlorpyrifos, Chlorpyrifos-methyl, Coumaphos, Cyanophos, Demeton-S-methyl, Diazinon, Dichlorvos/DDVP, Dicrotophos, Dimethoate, Dimethylvinphos, Disulfoton, EPN, Ethion, Ethoprophos, Famphur, Fenamiphos, Fenitrothion, Fenthion, Fosthiazate, Heptenophos, Imicyafos, Isofenphos, Isopropyl O-(methoxyaminothio-phosphoryl) salicylat, Isoxathion, Malathion, Mecarbam, Methamidophos, Methidathion, Mevinphos, Monocrotophos, Naled, Omethoate, Oxydemeton-methyl, Parathion, Parathion-methyl, Phenthoate, Phorate, Phosalone, Phosmet, Phosphamidon, Phoxim, Pirimiphos-methyl, Profenofos, Propetamphos, Prothiofos, Pyraclofos, Pyridaphenthion, Quinalphos, Sulfotep, Tebupirimfos, Temephos, Terbufos, Tetrachlorvinphos, Thiometon, Triazophos, Triclorfon und Vamidothion.
   (2) GABA-gesteuerte Chlorid-Kanal-Antagonisten, wie beispielsweise Cyclodien-organochlorine, z.B. Chlordane und Endosulfan oder Phenylpyrazole (Fiprole), z.B. Ethiprole und Fipronil.
   (3) Natrium-Kanal-Modulatoren / Spannungsabhängige Natrium-Kanal-Blocker, wie beispielsweise Pyrethroide, z.B. Acrinathrin, Allethrin, d-cis-trans Allethrin, d-trans Allethrin, Bifenthrin, Bioallethrin, Bioallethrin S-cyclopentenyl Isomer, Bioresmethrin, Cycloprothrin, Cyfluthrin, beta-Cyfluthrin, Cyhalothrin, lambda-Cyhalothrin, gamma-Cyhalothrin, Cypermethrin, alpha-Cypermethrin, beta-Cypermethrin, theta-Cypermethrin, zeta-Cypermethrin, Cyphenothrin [(1R)-trans-Isomere], Deltamethrin, Empenthrin [(EZ)-(1R)-Isomere), Esfenvalerate, Etofenprox, Fenpropathrin, Fenvalerate, Flucythrinate, Flumethrin, tau-Fluvalinate, Halfenprox, Imiprothrin, Kadethrin, Momfluorothrin, Permethrin, Phenothrin [(1R)-trans-Isomer), Prallethrin, Pyrethrine (pyrethrum), Resmethrin, Silafluofen, Tefluthrin, Tetramethrin, Tetramethrin [(1R)- Isomere)], Tralomethrin und Transfluthrin oder DDT oder Methoxychlor.
   (4) Nikotinerge Acetylcholin-Rezeptor (nAChR) Agonisten, wie beispielsweise Neonikotinoide, z.B. Acetamiprid, Clothianidin, Dinotefuran, Imidacloprid, Nitenpyram, Thiacloprid und Thiamethoxam oder Nikotin oder Sulfoxaflor oder Flupyradifurone.
   (5) Nikotinerge Acetylcholin-Rezeptor (nAChR) allosterische Aktivatoren, wie beispielsweise Spinosine, z.B. Spinetoram und Spinosad.
   (6) Chlorid-Kanal-Aktivatoren, wie beispielsweise Avermectine/Milbemycine, z.B. Abamectin, Emamectin-benzoat, Lepimectin und Milbemectin.
   (7) Juvenilhormon-Imitatoren, wie beispielsweise Juvenilhormon-Analoge, z.B. Hydroprene, Kinoprene und Methoprene oder Fenoxycarb oder Pyriproxyfen.
   (8) Wirkstoffe mit unbekannten oder nicht spezifischen Wirkmechanismen, wie beispielsweise Alkylhalide, z.B. Methylbromid und andere Alkylhalide; oderChloropicrin oder Sulfurylfluorid oder Borax oder Brechweinstein.
   (9) Selektive Fraßhemmer, z.B. Pymetrozine oder Flonicamid.
   (10) Milbenwachstumsinhibitoren, z.B. Clofentezine, Hexythiazox und Diflovidazin oder Etoxazole.
   (11) Mikrobielle Disruptoren der Insektendarmmembran, z.B. Bacillus thuringiensis Subspezies israelensis, Bacillus sphaericus, Bacillus thuringiensis Subspezies aizawai, Bacillus thuringiensis Subspezies kurstaki, Bacillus thuringiensis Subspezies tenebrionis und BT Pflanzenproteine: Cry1Ab, Cry1Ac, Cry1Fa, Cry2Ab, mCry3A, Cry3Ab, Cry3Bb, Cry34/35Ab1.
   (12) Inhibitoren der oxidativen Phosphorylierung, ATP-Disruptoren, wie beispielsweise Diafenthiuron oder organozinnverbindungen, z.B. Azocyclotin, Cyhexatin und Fenbutatin-oxid oder Propargite oder Tetradifon.
   (13) Entkoppler der oxidativen Phoshorylierung durch Unterbrechung des H-Protongradienten, wie beispielsweise Chlorfenapyr, DNOC und Sulfluramid.
   (14) Nikotinerge Acetylcholin-Rezeptor-Antagonisten, wie beispielsweise Bensultap, Cartaphydrochlorid, Thiocyclam und Thiosultap-Natrium.
   (15) Inhibitoren der Chitinbiosynthese, Typ 0, wie beispielsweise Bistrifluron, Chlorfluazuron, Diflubenzuron, Flucycloxuron, Flufenoxuron, Hexaflumuron, Lufenuron, Novaluron, Noviflumuron, Teflubenzuron und Triflumuron.
   (16) Inhibitoren der Chitinbiosynthese, Typ 1, wie beispielsweise Buprofezin.
   (17) Häutungsstörende Wirkstoffe, Dipteran, wie beispielsweise Cyromazine.
   (18) Ecdyson-Rezeptor Agonisten, wie beispielsweise Chromafenozide, Halofenozide, Methoxyfenozide und Tebufenozide.
   (19) Oktopaminerge Agonisten, wie beispielsweise Amitraz.
   (20) Komplex-III-Elektronentransportinhibitoren, wie beispielsweise Hydramethylnon oder Acequinocyl oder Fluacrypyrim.
   (21) Komplex-I-Elektronentransportinhibitoren, beispielsweise METI-Akarizide, z.B. Fenazaquin, Fenpyroximate, Pyrimidifen, Pyridaben, Tebufenpyrad und Tolfenpyrad oder Rotenone (Derris).
   (22) Spannungsabhängige Natriumkanal-Blocker, z.B. Indoxacarb oder Metaflumizone.
   (23) Inhibitoren der Acetyl-CoA-Carboxylase, wie beispielsweise Tetron- und Tetramsäurederivate, z.B. Spirobudiclofen, Spirodiclofen, Spiromesifen und Spirotetramat.
   (24) Komplex-IV-Elektronentransportinhibitoren, wie beispielsweise Phosphine, z.B. Aluminiumphosphid, Calciumphosphid, Phosphin und Zinkphosphid oder Cyanid.
   (25) Komplex-II-Elektronentransportinhibitoren, wie beispielsweise Cyenopyrafen und Cyflumetofen.
   (28) Ryanodinrezeptor-Effektoren, wie beispielsweise Diamide, z.B. Chlorantraniliprole, Cyantraniliprole, Flubendiamide und Tetrachloroantraniliprole.

Weitere insektizide Wirkstoffe mit unbekanntem oder nicht eindeutigem Wirkmechanismus, wie beispielsweise Afidopyropen, Afoxolaner, Azadirachtin, Benclothiaz, Benzoximate, Bifenazate, Broflanilide, Bromopropylate, Chinomethionat, Cryolite, Cyclaniliprole, Cycloxaprid, Cyhalodiamide Dicloromezotiaz, Dicofol, Diflovidazin, Flometoquin, Fluazaindolizine, Fluensulfone, Flufenerim, Flufenoxystrobin, Flufiprole, Fluhexafon, Fluopyram, Fluralaner, Fluxametamide, Fufenozide, Guadipyr, Heptafluthrin, Imidaclothiz, Iprodione, Lotilaner, Meperfluthrin, Paichongding, Pyflubumide, Pyridalyl, Pyrifluquinazon, Pyriminostrobin, Sarolaner, Tetramethylfluthrin, Tetraniliprole, Tetrachlorantraniliprole, Tioxazafen, Thiofluoximate, Triflumezopyrim und Iodmethane; desweiteren Präparate auf Basis vonBacillus firmus (I-1582, BioNeem, Votivo) , sowie folgende bekannte wirksame Verbindungen: 1-{2-Fluor-4-methyl-5-[(2,2,2-trifluorethyl)sulfinyl]phenyl}-3-(trifluormethyl)-1H-1,2,4-triazol-5-amin (bekannt aus WO2006/043635), {1'-[(2E)-3-(4-Chlorphenyl)prop-2-en-1-yl]-5-fluorspiro[indol-3,4'-piperidin]-1(2H)-yl}(2-chlorpyridin-4-yl)methanon (bekannt aus WO2003/106457), 2-Chlor-N-[2-{1-[(2E)-3-(4-chlorphenyl)prop-2-en-1-yl]piperidin-4-yl} -4-(trifluormethyl)phenyl]isonicotinamid (bekannt aus WO2006/003494), 3-(2,5-Dimethylphenyl)-4-hydroxy-8-methoxy-1,8-diazaspiro[4.5]dec-3-en-2-on (bekannt aus WO2009/049851), 3-(2,5-Dimethylphenyl)-8-methoxy-2-oxo-1,8-diazaspiro[4.5]dec-3-en-4-yl-ethylcarbonat (bekannt aus WO2009/049851), 4-(But-2-in-1-yloxy)-6-(3,5-dimethylpiperidin-1-yl)-5-fluorpyrimidin (bekannt aus WO2004/099160), 4-(But-2-in-1-yloxy)-6-(3-chlorphenyl)pyrimidin (bekannt aus WO2003/076415), PF1364 (CAS-Reg.No. 1204776-60-2), Methyl-2-[2-({[3-brom-1-(3-chlorpyridin-2-yl)-1H-pyrazol-5-yl]carbonyl}amino)-5-chlor-3-methylbenzoyl]-2-methylhydrazincarboxylat (bekannt aus WO2005/085216), Methyl-2-[2-({[3-brom-1-(3-chlorpyridin-2-yl)-1H-pyrazol-5-yl]carbonyl}amino)-5-cyan-3-methylbenzoyl]-2-ethylhydrazincarboxylat (bekannt aus WO2005/085216), Methyl-2-[2-({[3-brom-1-(3-chlorpyridin-2-yl)-1H-pyrazol-5-yl]carbonyl} amino)-5-cyan-3-methylbenzoyl]-2-methylhydrazincarboxylat (bekannt aus WO2005/085216), Methyl-2-[3,5-dibrom-2-({[3-brom-1-(3-chlorpyridin-2-yl)-1H-pyrazol-5-yl]carbonyl}amino)benzoyl]-2-ethylhydrazincarboxylat (bekannt aus WO2005/085216), N-[2-(5-Amino-1,3,4-thiadiazol-2-yl)-4-chlor-6-methylphenyl]-3-brom-1-(3-chlorpyridin-2-yl)-1H-pyrazol-5-carboxamid (bekannt aus CN102057925), 4-[5-(3,5-Dichlorphenyl)-5-(trifluormethyl)-4,5-dihydro-1,2-oxazol-3-yl]-2-methyl-N-(1-oxidothietan-3-yl)benzamid (bekannt aus WO2009/080250), N-[(2E)-1-[(6-Chlorpyridin-3-yl)methyl]pyridin-2(1H)-yliden]-2,2,2-trifluoracetamid (bekannt aus WO2012/029672), 1-[(2-Chlor-1,3-thiazol-5-yl)methyl]-4-oxo-3-phenyl-4H-pyrido[1,2-a]pyrimidin-1-ium-2-olat (bekannt aus WO2009/099929), 1-[(6-Chlorpyridin-3-yl)methyl]-4-oxo-3-phenyl-4H-pyrido[1,2-a]pyrimidin-1-ium-2-olat (bekannt aus WO2009/099929), 4-(3-{2,6-Dichlor-4-[(3,3-dichlorprop-2-en-1-yl)oxy]phenoxy}propoxy)-2-methoxy-6-(trifluormethyl)pyrimidin (bekannt aus CN101337940), N-[2-(tert-Butylcarbamoyl)-4-chlor-6-methylphenyl]-1-(3-chlorpyridin-2-yl)-3-(fluormethoxy)-1H-pyrazol-5-carboxamid (bekannt aus WO2008/134969), Butyl-[2-(2,4-dichlorphenyl)-3-oxo-4-oxaspiro[4.5]dec-1-en-1-yl]-carbonat (bekannt aus CN 102060818), (3E)-3-[1-[(6-Chlor-3-pyridyl)methyl]-2-pyridyliden]-1,1,1-trifluor-propan-2-on (bekannt aus WO2013/144213), N-(Methylsulfonyl)-6-[2-(pyridin-3-yl)-1,3-thiazol-5-yl]pyridin-2-carboxamid (bekannt aus WO2012/000896), N-[3-(Benzylcarbamoyl)-4-chlorphenyl]-1-methyl-3-(pentafluorethyl)-4-(trifluormethyl)-1H-pyrazol-5-carboxamid (bekannt aus WO2010/051926), 5-Brom-4-chlor-N-[4-chlor-2-methyl-6-(methylcarbamoyl)phenyl] -2-(3-chlor-2-pyridyl)pyrazole-3-carboxamid (bekannt aus CN103232431), Tioxazafen, 4-[5-(3,5-Dichlorphenyl)-4,5-dihydro-5-(trifluormethyl)-3-isoxazolyl]-2-methyl-N-(cis-1-oxido-3-thietanyl)-benzamid, 4-[5-(3,5-Dichlorphenyl)-4,5-dihydro-5-(trifluormethyl)-3-isoxazolyl]-2-methyl-N-(trans-1-oxido-3-thietanyl)-benzamid und 4-[(5S)-5-(3,5-Dichlorphenyl)-4,5-dihydro-5-(trifluormethyl)-3-isoxazolyl]-2-methyl-N-(cis-1-oxido-3-thietanyl)benzamid (bekannt aus WO 2013050317 A1), N-[3-Chlor-1-(3-pyridinyl)-1H-pyrazol-4-yl]-N-ethyl-3-[(3,3,3-trifluorpropyl)sulfinyl]-propanamid, (+)-N-[3-Chlor-1-(3-pyridinyl)-1H-pyrazol-4-yl]-N-ethyl-3-[(3,3,3-trifluorpropyl)sulfinyl]-propanamid und (-)-N-[3-Chlor-1-(3-pyridinyl)-1H-pyrazol-4-yl]-N-ethyl-3-[(3,3,3-trifluorpropyl)sulfinyl]-propanamid (bekannt aus WO 2013162715 A2, WO 2013162716 A2, US 20140213448 A1), 5-[[(2E)-3-Chlor-2-propen-1-yl]amino]-1-[2,6-dichlor-4-(trifluoromethyl)phenyl]-4-[(trifluormethyl)sulfinyl]-1H-pyrazol-3-carbonitril (bekannt aus CN 101337937 A), 3-Brom-N-[4-chlor-2-methyl-6-[(methylamino)thioxomethyl]phenyl]-1-(3-chlor-2-pyridinyl)-1H-pyrazol-5-carboxamid, (Liudaibenjiaxuanan, bekannt aus CN 103109816 A); N-[4-Chlor-2-[[(1,1-dimethylethyl)amino]carbonyl]-6-methylphenyl]-1-(3-chlor-2-pyridinyl)-3-(fluormethoxy)-1H-pyrazol-5-carboxamid (bekannt aus WO 2012034403 A1), N-[2-(5-Amino-1,3,4-thiadiazol-2-yl)-4-chlor-6-methylphenyl]-3-brom-1-(3-chlor-2-pyridinyl)-1H-pyrazol-5-carboxamid (bekannt aus WO 2011085575 A1), 4-[3-[2,6-Dichlor-4-[(3,3-dichlor-2-propen-1-yl)oxy]phenoxy]propoxy]-2-methoxy-6-(trifluormethyl)-pyrimidin (bekannt aus CN 101337940 A); (2E)- und (2Z)-2-[2-(4-Cyanophenyl)-1-[3-(trifluormethyl)phenyl] ethylidene] -N- [4-(difluormethoxy)phenyl] -hydrazine-carboxamid (bekannt aus CN 101715774 A); 3-(2,2-Dichloroethenyl)-2,2-dimethyl-4-(1H-benzimidazol-2-yl)phenyl-cyclopropan-carbonsäureester (bekannt aus CN 103524422 A); (4aS)-7-Chlor-2,5-dihydro-2-[[(methoxycarbonyl)[4-[(trifluormethyl)thio]phenyl]amino]carbonyl]-indeno[1,2-e][1,3,4]oxadiazine-4a(3H)-carbonsäuremethylester (bekannt aus CN 102391261 A).

### Beispiele für herbiziden Mischungspartner sind:

Acetochlor, acifluorfen, acifluorfen-sodium, aclonifen, alachlor, allidochlor, alloxydim, alloxydimsodium, ametryn, amicarbazone, amidochlor, amidosulfuron, 4-amino-3-chloro-6-(4-chloro-2-fluoro-3-methylphenyl)-5-fluoropyridine-2-carboxylic acid, aminocyclopyrachlor, aminocyclopyrachlorpotassium, aminocyclopyrachlor-methyl, aminopyralid, amitrole, ammoniumsulfamate, anilofos, asulam, atrazine, azafenidin, azimsulfuron, beflubutamid, benazolin, benazolin-ethyl, benfluralin, benfuresate, bensulfuron, bensulfuron-methyl, bensulide, bentazone, benzobicyclon, benzofenap, bicyclopyron, bifenox, bilanafos, bilanafos-sodium, bispyribac, bispyribac-sodium, bromacil, bromobutide, bromofenoxim, bromoxynil, bromoxynil-butyrate, -potassium, -heptanoate und -octanoate, busoxinone, butachlor, butafenacil, butamifos, butenachlor, butralin, butroxydim, butylate, cafenstrole, carbetamide, carfentrazone, carfentrazone-ethyl, chloramben, chlorbromuron, chlorfenac, chlorfenac-sodium, chlorfenprop, chlorflurenol, chlorflurenol-methyl, chloridazon, chlorimuron, chlorimuron-ethyl, chlorophthalim, chlorotoluron, chlorthal-dimethyl, chlorsulfuron, cinidon, cinidon-ethyl, cinmethylin, cinosulfuron, clacyfos, clethodim, clodinafop, clodinafop-propargyl, clomazone, clomeprop, clopyralid, cloransulam, cloransulam-methyl, cumyluron, cyanamide, cyanazine, cycloate, cyclopyrimorate, cyclosulfamuron, cycloxydim, cyhalofop, cyhalofop-butyl, cyprazine, 2,4-D, 2,4-D-butotyl, -butyl, - dimethylammonium, -diolamin, -ethyl, 2-ethylhexyl, -isobutyl, -isooctyl, -isopropylammonium, - potassium, -triisopropanolammonium und -trolamine, 2,4-DB, 2,4-DB-butyl, -dimethylammonium, isooctyl, -potassium und -sodium, daimuron (dymron), dalapon, dazomet, n-decanol, desmedipham, detosyl-pyrazolate (DTP), dicamba, dichlobenil, 2-(2,4-dichlorobenzyl)-4,4-dimethyl-1,2-oxazolidin-3-one, 2-(2,5-dichlorobenzyl)-4,4-dimethyl-1,2-oxazolidin-3-one, dichlorprop, dichlorprop-P, diclofop, diclofop-methyl, diclofop-P-methyl, diclosulam, difenzoquat, diflufenican, diflufenzopyr, diflufenzopyrsodium, dimefuron, dimepiperate, dimethachlor, dimethametryn, dimethenamid, dimethenamid-P, dimetrasulfuron, dinitramine, dinoterb, diphenamid, diquat, diquat-dibromid, dithiopyr, diuron, DNOC, endothal, EPTC, esprocarb, ethalfluralin, ethametsulfuron, ethametsulfuron-methyl, ethiozin, ethofumesate, ethoxyfen, ethoxyfen-ethyl, ethoxysulfuron, etobenzanid, F-9600, F-5231, i.e. N-[2-Chlor-4-fluor-5-[4-(3-fluorpropyl)-4,5-dihydro-5-oxo-1H-tetrazol-1-yl]-phenyl]-ethansulfonamid, F-7967, i.e. 3-[7-Chlor-5-fluor-2-(trifluormethyl)-1H-benzimidazol-4-yl]-1-methyl-6-(trifluormethyl)pyrimidin-2,4(1H,3H)-dion, fenoxaprop, fenoxaprop-P, fenoxaprop-ethyl, fenoxaprop-P-ethyl, fenoxasulfone, fenquinotrione, fentrazamide, flamprop, flamprop-M-isopropyl, flamprop-M-methyl, flazasulfuron, florasulam, fluazifop, fluazifop-P, fluazifop-butyl, fluazifop-P-butyl, flucarbazone, flucarbazone-sodium, flucetosulfuron, fluchloralin, flufenacet, flufenpyr, flufenpyr-ethyl, flumetsulam, flumiclorac, flumiclorac-pentyl, flumioxazin, fluometuron, flurenol, flurenol-butyl, -dimethylammonium und -methyl, fluoroglycofen, fluoroglycofen-ethyl, flupropanate, flupyrsulfuron, flupyrsulfuron-methyl-sodium, fluridone, flurochloridone, fluroxypyr, fluroxypyr-meptyl, flurtamone, fluthiacet, fluthiacet-methyl, fomesafen, fomesafen-sodium, foramsulfuron, fosamine, glufosinate, glufosinate-ammonium, glufosinate-P-sodium, glufosinate-P-ammonium, glufosinate-P-sodium, glyphosate, glyphosateammonium, -isopropylammonium, -diammonium, -dimethylammonium, -potassium, -sodium und - trimesium, H-9201, i.e. O-(2,4-Dimethyl-6-nitrophenyl)-O-ethyl-isopropylphosphoramidothioat, halauxifen, halauxifen-methyl, halosafen, halosulfuron, halosulfuron-methyl, haloxyfop, haloxyfop-P, haloxyfop-ethoxyethyl, haloxyfop-P-ethoxyethyl, haloxyfop-methyl, haloxyfop-P-methyl, hexazinone, HW-02, i.e. 1-(Dimethoxyphosphoryl)-ethyl-(2,4-dichlorphenoxy)acetat, imazamethabenz, Imazamethabenz-methyl, imazamox, imazamox-ammonium, imazapic, imazapic-ammonium, imazapyr, imazapyr-isopropylammonium, imazaquin, imazaquin-ammonium, imazethapyr, imazethapyrimmonium, imazosulfuron, indanofan, indaziflam, iodosulfuron, iodosulfuron-methyl-sodium, ioxynil, ioxynil-octanoate, -potassium und sodium, ipfencarbazone, isoproturon, isouron, isoxaben, isoxaflutole, karbutilate, KUH-043, i.e. 3-({ [5-(Difluormethyl)-1-methyl-3-(trifluormethyl)-1H-pyrazol-4-yl]methyl}sulfonyl)-5,5-dimethyl-4,5-dihydro-1,2-oxazol, ketospiradox, lactofen, lenacil, linuron, MCPA, MCPA-butotyl, -dimethylammonium, -2-ethylhexyl, -isopropylammonium, -potassium und - sodium, MCPB, MCPB-methyl, -ethyl und -sodium, mecoprop, mecoprop-sodium, und -butotyl, mecoprop-P, mecoprop-P-butotyl, -dimethylammonium, -2-ethylhexyl und -potassium, mefenacet, mefluidide, mesosulfuron, mesosulfuron-methyl, mesotrione, methabenzthiazuron, metam, metamifop, metamitron, metazachlor, metazosulfuron, methabenzthiazuron, methiopyrsulfuron, methiozolin, methyl isothiocyanate, metobromuron, metolachlor, S-metolachlor, metosulam, metoxuron, metribuzin, metsulfuron, metsulfuron-methyl, molinat, monolinuron, monosulfuron, monosulfuron-ester, MT-5950, i.e. N-[3-chlor-4-(1-methylethyl)-phenyl]-2-methylpentanamid, NGGC-011, napropamide, NC-310, i.e. 4-(2,4-Dichlorbenzoyl)-1-methyl-5-benzyloxypyrazol, neburon, nicosulfuron, nonanoic acid (Pelargonsäure), norflurazon, oleic acid (fatty acids), orbencarb, orthosulfamuron, oryzalin, oxadiargyl, oxadiazon, oxasulfuron, oxaziclomefon, oxyfluorfen, paraquat, paraquat dichloride, pebulate, pendimethalin, penoxsulam, pentachlorphenol, pentoxazone, pethoxamid, petroleum oils, phenmedipham, picloram, picolinafen, pinoxaden, piperophos, pretilachlor, primisulfuron, primisulfuron-methyl, prodiamine, profoxydim, prometon, prometryn, propachlor, propanil, propaquizafop, propazine, propham, propisochlor, propoxycarbazone, propoxycarbazone-sodium, propyrisulfuron, propyzamide, prosulfocarb, prosulfuron, pyraclonil, pyraflufen, pyraflufen-ethyl, pyrasulfotole, pyrazolynate (pyrazolate), pyrazosulfuron, pyrazosulfuron-ethyl, pyrazoxyfen, pyribambenz, pyribambenz-isopropyl, pyribambenz-propyl, pyribenzoxim, pyributicarb, pyridafol, pyridate, pyriftalid, pyriminobac, pyriminobac-methyl, pyrimisulfan, pyrithiobac, pyrithiobac-sodium, pyroxasulfone, pyroxsulam, quinclorac, quinmerac, quinoclamine, quizalofop, quizalofop-ethyl, quizalofop-P, quizalofop-P-ethyl, quizalofop-P-tefuryl, rimsulfuron, saflufenacil, sethoxydim, siduron, simazine, simetryn, SL-261, sulcotrion, sulfentrazone, sulfometuron, sulfometuron-methyl, sulfosulfuron, SYN-523, SYP-249, i.e. 1-Ethoxy-3-methyl-1-oxobut-3-en-2-yl-5-[2-chlor-4-(trifluormethyl)phenoxy]-2-nitrobenzoat, SYP-300, i.e. 1-[7-Fluor-3-oxo-4-(prop-2-in-1-yl)-3,4-dihydro-2H-1,4-benzoxazin-6-yl]-3-propyl-2-thioxoimidazolidin-4,5-dion, 2,3,6-TBA, TCA (Trifluoressigsäure), TCA-sodium, tebuthiuron, tefuryltrione, tembotrione, tepraloxydim, terbacil, terbucarb, terbumeton, terbuthylazin, terbutryn, thenylchlor, thiazopyr, thiencarbazone, thiencarbazone-methyl, thifensulfuron, thifensulfuron-methyl, thiobencarb, tiafenacil, tolpyralate, topramezone, tralkoxydim, triafamone, tri-allate, triasulfuron, triaziflam, tribenuron, tribenuron-methyl, triclopyr, trietazine, trifloxysulfuron, trifloxysulfuron-sodium, trifludimoxazin, trifluralin, triflusulfuron, triflusulfuron-methyl, tritosulfuron, urea sulfate, vernolate, XDE-848, ZJ-0862, i.e. 3,4-Dichlor-N-{2-[(4,6-dimethoxypyrimidin-2-yl)oxy]benzyl}anilin, sowie die folgenden Verbindungen:

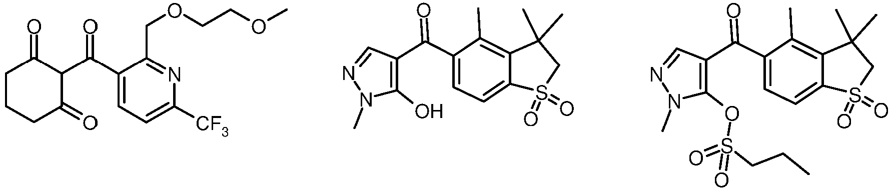

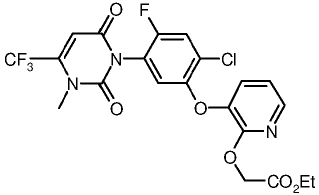

### Beispiele für Pflanzenwachstumsregulatoren als mögliche Mischungspartner sind:

Acibenzolar, acibenzolar-S-methyl, 5-Aminolävulinsäure, ancymidol, 6-benzylaminopurine, Brassinolid, Catechin, chlormequat chloride, cloprop, cyclanilide, 3-(Cycloprop-1-enyl)propionsäure, daminozide, dazomet, n-decanol, dikegulac, dikegulac-sodium, endothal, endothal-dipotassium, -disodium, und mono(N,N-dimethylalkylammonium), ethephon, flumetralin, flurenol, flurenol-butyl, flurprimidol, forchlorfenuron, gibberellic acid, inabenfide, indol-3-acetic acid (IAA), 4-indol-3-ylbutyric acid, isoprothiolane, probenazole, Jasmonsäure, Jasmonsäuremethylester, maleic hydrazide, mepiquat chloride, 1-methylcyclopropene, 2-(1-naphthyl)acetamide, 1-naphthylacetic acid, 2- naphthyloxyacetic acid, nitrophenolate-mixture, 4-Oxo-4[(2-phenylethyl)amino]buttersäure, paclobutrazol, N-phenylphthalamic acid, prohexadione, prohexadione-calcium, prohydrojasmone, Salicylsäure, Strigolacton, tecnazene, thidiazuron, triacontanol, trinexapac, trinexapac-ethyl, tsitodef, uniconazole, uniconazole-P.

Folgende Gruppen von Verbindungen kommen beispielsweise als Safener in Frage:
S1) Verbindungen aus der Gruppe heterocyclischer Carbonsäurederivate:
   S1^{a}) Verbindungen vom Typ der Dichlorphenylpyrazolin-3-carbonsäure (S1^{a}), vorzugsweise Verbindungen wie
      1-(2,4-Dichlorphenyl)-5-(ethoxycarbonyl)-5-methyl-2-pyrazolin-3-carbonsäure, 1-(2,4-Dichlorphenyl)-5-(ethoxycarbonyl)-5-methyl-2-pyrazolin-3-carbonsäureethylester (S1-1) ("Mefenpyr-diethyl"), und verwandte Verbindungen, wie sie in der WO-A-91/07874 beschrieben sind;
   S1^{b}) Derivate der Dichlorphenylpyrazolcarbonsäure (S1^{b}), vorzugsweise Verbindungen wie 1-(2,4-Dichlorphenyl)-5-methylpyrazol-3-carbonsäureethylester (S1-2), 1-(2,4-Dichlorphenyl)-5-isopropylpyrazol-3-carbonsäureethylester (S1-3), 1-(2,4-Dichlorphenyl)-5-(1,1-dimethyl-ethyl)pyrazol-3-carbonsäureethylester (S1-4) und verwandte Verbindungen, wie sie in EP-A-333 131 und EP-A-269 806 beschrieben sind;
   S1^{c}) Derivate der 1,5-Diphenylpyrazol-3-carbonsäure (S1^{c}), vorzugsweise Verbindungen wie 1-(2,4-Dichlorphenyl)-5-phenylpyrazol-3-carbonsäureethylester (S1-5), 1-(2-Chlorphenyl)-5-phenylpyrazol-3-carbonsäuremethylester (S1-6) und verwandte Verbindungen wie sie beispielsweise in der EP-A-268554 beschrieben sind;
   S1^{d}) Verbindungen vom Typ der Triazolcarbonsäuren (S1^{d}), vorzugsweise Verbindungen wie Fenchlorazol(-ethylester), d.h. 1-(2,4-Dichlorphenyl)-5-trichlormethyl-(1H)-1,2,4-triazol-3-carbonsäureethylester (S1-7), und verwandte Verbindungen, wie sie in EP-A-174 562 und EP-A-346 620 beschrieben sind;
   S1^{e}) Verbindungen vom Typ der 5-Benzyl- oder 5-Phenyl-2-isoxazolin-3- carbonsäure, oder der 5,5-Diphenyl-2-isoxazolin-3-carbonsäure(S1^{e}), vorzugsweise Verbindungen wie 5-(2,4-Dichlorbenzyl)-2-isoxazolin-3-carbonsäureethylester (S1-8) oder 5-Phenyl-2-isoxazolin-3-carbonsäureethylester (S1-9) und verwandte Verbindungen, wie sie in WO-A-91/08202 beschrieben sind, bzw. 5,5-Diphenyl-2-isoxazolin-carbonsäure (S1-10) oder 5,5-Diphenyl-2-isoxazolin-3-carbonsäureethylester (S1-11) ("Isoxadifen-ethyl") oder -n-propylester (S1-12) oder 5-(4-Fluorphenyl)-5-phenyl-2-isoxazolin-3-carbonsäureethylester (S1-13), wie sie in der Patentanmeldung WO-A-95/07897 beschrieben sind.
S2) Verbindungen aus der Gruppe der 8-Chinolinoxyderivate (S2):
   S2^{a}) Verbindungen vom Typ der 8-Chinolinoxyessigsäure (S2^{a}), vorzugsweise (5-Chlor-8-chinolinoxy)essigsäure-(1-methylhexyl)-ester ("Cloquintocet-mexyl") (S2-1), (5-Chlor-8-chinolinoxy)essigsäure-(1,3-dimethyl-but-1-yl)-ester (S2-2), (5-Chlor-8-chinolinoxy)essigsäure-4-allyl-oxy-butylester (S2-3), (5-Chlor-8-chinolinoxy)essigsäure-1-allyloxy-prop-2-ylester (S2-4), (5-Chlor-8-chinolinoxy)essigsäureethylester (S2-5), (5-Chlor-8-chinolinoxy)essigsäuremethylester (S2-6), (5-Chlor-8-chinolinoxy)essigsäureallylester (S2-7), (5-Chlor-8-chinolinoxy)essigsäure-2-(2-propyliden-iminoxy)-1-ethylester (S2-8), (5-Chlor-8-chinolinoxy)essigsäure-2-oxo-prop-1-ylester (S2-9) und verwandte Verbindungen, wie sie in EP-A-86 750, EP-A-94 349 und EP-A-191 736 oder EP-A-0 492 366 beschrieben sind, sowie (5-Chlor-8-chinolinoxy)essigsäure (S2-10), deren Hydrate und Salze, beispielsweise deren Lithium-, Natrium- Kalium-, Kalzium-, Magnesium-, Aluminium-, Eisen-, Ammonium-, quartäre Ammonium-, Sulfonium-, oder Phosphoniumsalze wie sie in der WO-A-2002/34048 beschrieben sind;
   S2^{b}) Verbindungen vom Typ der (5-Chlor-8-chinolinoxy)malonsäure (S2^{b}), vorzugsweise Verbindungen wie (5-Chlor-8-chinolinoxy)malonsäurediethylester, (5-Chlor-8-chinolinoxy)malonsäurediallylester, (5-Chlor-8-chinolinoxy)malonsäure-methyl-ethylester und verwandte Verbindungen, wie sie in EP-A-0 582 198 beschrieben sind.
S3) Wirkstoffe vom Typ der Dichloracetamide (S3), die häufig als Vorauflaufsafener (bodenwirksame Safener) angewendet werden, wie z. B.
   "Dichlormid" (N,N-Diallyl-2,2-dichloracetamid) (S3-1),
   "R-29148" (3-Dichloracetyl-2,2,5-trimethyl-1,3-oxazolidin) der Firma Stauffer (S3-2),
   "R-28725" (3-Dichloracetyl-2,2,-dimethyl-1,3-oxazolidin) der Firma Stauffer (S3-3),
   "Benoxacor" (4-Dichloracetyl-3,4-dihydro-3-methyl-2H-1,4-benzoxazin) (S3-4),
   "PPG-1292" (N-Allyl-N-[(1,3-dioxolan-2-yl)-methyl]-dichloracetamid) der Firma PPG Industries (S3-5),
   "DKA-24" (N-Allyl-N-[(allylaminocarbonyl)methyl]-dichloracetamid) der Firma Sagro-Chem (S3-6),
   "AD-67" oder "MON 4660" (3-Dichloracetyl-1-oxa-3-aza-spiro[4,5]decan) der Firma Nitrokemia bzw. Monsanto (S3-7),
   "TI-35" (1-Dichloracetyl-azepan) der Firma TRI-Chemical RT (S3-8),
   "Diclonon" (Dicyclonon) oder "BAS145138" oder "LAB145138" (S3-9) ((RS)-1-Dichloracetyl-3,3,8a-trimethylperhydropyrrolo[1,2-a]pyrimidin-6-on) der Firma BASF, "Furilazol" oder "MON 13900" ((RS)-3-Dichloracetyl-5-(2-furyl)-2,2-dimethyloxazolidin) (S3-10), sowie dessen (R)-Isomer (S3-11).
S4) Verbindungen aus der Klasse der Acylsulfonamide (S4):
   S4^{a}) N-Acylsulfonamide der Formel (S4^{a}) und deren Salze wie sie in der WO-A-97/45016 beschrieben sind, 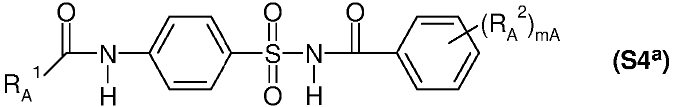 worin
      - R_{A}¹: (C₁-C₆)Alkyl, (C₃-C₆)Cycloalkyl, wobei die 2 letztgenannten Reste durch v_{A} Substituenten aus der Gruppe Halogen, (C₁-C₄)Alkoxy, (C₁-C₆)Haloalkoxy und (C₁-C₄)Alkylthio und im Falle cyclischer Reste auch durch (C₁-C₄)Alkyl und (C₁-C₄)Haloalkyl substituiert sind;
      - R_{A}²: Halogen, (C₁-C₄)Alkyl, (C₁-C₄)Alkoxy, CF₃;
      - m_{A}: 1 oder 2;
      - v_{A}: ist 0, 1, 2 oder 3 bedeuten;
   S4^{b}) Verbindungen vom Typ der 4-(Benzoylsulfamoyl)benzamide der Formel (S4^{b}) und deren Salze, wie sie in der WO-A-99/16744 beschrieben sind, 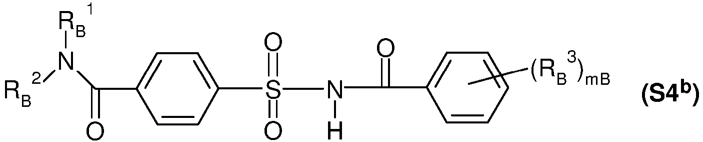 worin
      - R_{B}¹, R_{B}²: unabhängig voneinander Wasserstoff, (C₁-C₆)Alkyl, (C₃-C₆)Cycloalkyl, (C₃-C₆)Alkenyl, (C₃-C₆)Alkinyl,
      - R_{B}³: Halogen, (C₁-C₄)Alkyl, (C₁-C₄)Haloalkyl oder (C₁-C₄)Alkoxy und
      - m_{B}: 1 oder 2 bedeuten,

      z.B. solche worin
      R_{B}¹ = Cyclopropyl, R_{B}² = Wasserstoff und (R_{B}³) = 2-OMe ist ("Cyprosulfamide", S4-1),
      R_{B}¹ = Cyclopropyl, R_{B}² = Wasserstoff und (R_{B}³) = 5-Cl-2-OMe ist (S4-2),
      R_{B}¹ = Ethyl, R_{B}² = Wasserstoff und (R_{B}³) = 2-OMe ist (S4-3),
      R_{B}¹ = Isopropyl, R_{B}² = Wasserstoff und (R_{B}³) = 5-Cl-2-OMe ist (S4-4) und
      R_{B}¹ = Isopropyl, R_{B}² = Wasserstoff und (R_{B}³) = 2-OMe ist (S4-5);
   S4^{c}) Verbindungen aus der Klasse der Benzoylsulfamoylphenylharnstoffe der Formel (S4^{c}), wie sie in der EP-A-365484 beschrieben sind, 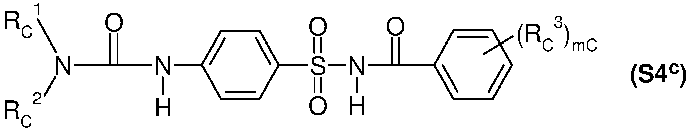 worin
      - R_{C}¹, R_{C}²: unabhängig voneinander Wasserstoff, (C₁-C₈)Alkyl, (C₃-C₈)Cycloalkyl, (C₃-C₆)Alkenyl, (C₃-C₆)Alkinyl,
      - R_{C}³: Halogen, (C₁-C₄)Alkyl, (C₁-C₄)Alkoxy, CF₃ und
      - m_{C}: 1 oder 2 bedeuten;
      beispielsweise
      1-[4-(N-2-Methoxybenzoylsulfamoyl)phenyl]-3-methylharnstoff,
      1-[4-(N-2-Methoxybenzoylsulfamoyl)phenyl]-3,3-dimethylharnstoff,
      1-[4-(N-4,5-Dimethylbenzoylsulfamoyl)phenyl]-3-methylharnstoff;
   S4^{d}) Verbindungen vom Typ der N-Phenylsulfonylterephthalamide der Formel (S4^{d}) und deren Salze, die z.B. bekannt sind aus CN 101838227, 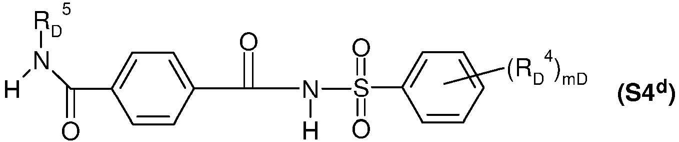 worin
      - R_{D}⁴: Halogen, (C₁-C₄)Alkyl, (C₁-C₄)Alkoxy, CF₃;
      - m_{D}: 1 oder 2;
      - R_{D}⁵: Wasserstoff, (C₁-C₆)Alkyl, (C₃-C₆)Cycloalkyl, (C₂-C₆)Alkenyl, (C₂-C₆)Alkinyl, (C₅-C₆)Cycloalkenyl bedeutet.
S5) Wirkstoffe aus der Klasse der Hydroxyaromaten und der aromatisch-aliphatischen Carbonsäurederivate (S5), z.B.
   3,4,5-Triacetoxybenzoesäureethylester, 3,5-Dimethoxy-4-hydroxybenzoesäure, 3,5-Dihydroxybenzoesäure, 4-Hydroxysalicylsäure, 4-Fluorsalicyclsäure, 2-Hydroxyzimtsäure, 2,4-Dichlorzimtsäure, wie sie in der WO-A-2004/084631, WO-A-2005/015994, WO-A-2005/016001 beschrieben sind.
S6) Wirkstoffe aus der Klasse der 1,2-Dihydrochinoxalin-2-one (S6), z.B. 1-Methyl-3-(2-thienyl)-1,2-dihydrochinoxalin-2-on, 1-Methyl-3-(2-thienyl)-1,2-dihydro-chinoxalin-2-thion, 1-(2-Aminoethyl)-3-(2-thienyl)-1,2-dihydro-chinoxalin-2-on-hydrochlorid, 1-(2-Methylsulfonylaminoethyl)-3-(2-thienyl)-1,2-dihydro-chinoxalin-2-on, wie sie in der WO-A-2005/112630 beschrieben sind.
S7) Verbindungen aus der Klasse der Diphenylmethoxyessigsäurederivate (S7), z.B. Diphenylmethoxyessigsäuremethylester (CAS-Reg.Nr. 41858-19-9) (S7-1), Diphenylmethoxyessigsäureethylester oder Diphenylmethoxyessigsäure wie sie in der WO-A-98/38856 beschrieben sind.
S8) Verbindungen der Formel (S8),wie sie in der WO-A-98/27049 beschrieben sind,
   worin die Symbole und Indizes folgende Bedeutungen haben: 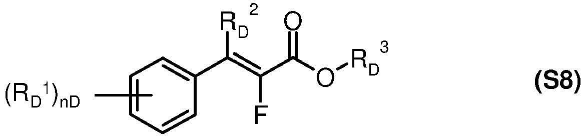
   - R_{D}¹: ist Halogen, (C₁-C₄)Alkyl, (C₁-C₄)Haloalkyl, (C₁-C₄)Alkoxy, (C₁-C₄)Haloalkoxy,
   - R_{D}²: ist Wasserstoff oder (C₁-C₄)Alkyl,
   - R_{D}³: ist Wasserstoff, (C₁-C₈)Alkyl, (C₂-C₄)Alkenyl, (C₂-C₄)Alkinyl, oder Aryl, wobei jeder der vorgenannten C-haltigen Reste unsubstituiert oder durch einen oder mehrere, vorzugsweise bis zu drei gleiche oder verschiedene Reste aus der Gruppe, bestehend aus Halogen und Alkoxy substituiert ist; oder deren Salze,
   - n_{D}: ist eine ganze Zahl von 0 bis 2.
S9) Wirkstoffe aus der Klasse der 3-(5-Tetrazolylcarbonyl)-2-chinolone (S9), z.B. 1,2-Dihydro-4-hydroxy-1-ethyl-3-(5-tetrazolylcarbonyl)-2-chinolon (CAS-Reg.Nr.: 219479-18-2), 1,2-Dihydro-4-hydroxy-1-methyl-3-(5-tetrazolyl-carbonyl)-2-chinolon (CAS-Reg.Nr. 95855-00-8), wie sie in der WO-A-1999/000020 beschrieben sind.
S10) Verbindungen der Formeln (S10^{a}) oder (S10^{b}),
   wie sie in der WO-A-2007/023719 und WO-A-2007/023764 beschrieben sind, worin 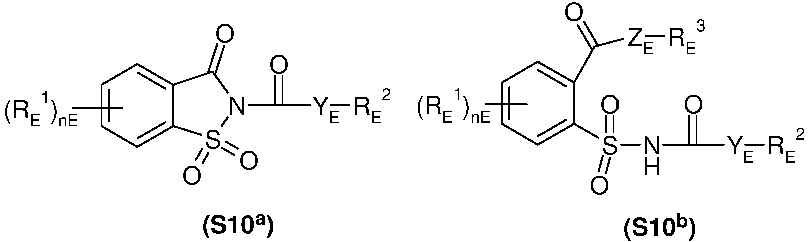
   - R_{E}¹: Halogen, (C₁-C₄)Alkyl, Methoxy, Nitro, Cyano, CF₃, OCF₃
   - Y_{E}, Z_{E}: unabhängig voneinander O oder S,
   - n_{E}: eine ganze Zahl von 0 bis 4,
   - R_{E}²: (C₁-C₁₆)Alkyl, (C₂-C₆)Alkenyl, (C₃-C₆)Cycloalkyl, Aryl; Benzyl, Halogenbenzyl,
   - R_{E}³: Wasserstoff oder (C₁-C₆)Alkyl bedeuten.
S11) Wirkstoffe vom Typ der Oxyimino-Verbindungen (S11), die als Saatbeizmittel bekannt sind, wie z. B.
   "Oxabetrinil" ((Z)-1,3-Dioxolan-2-ylmethoxyimino(phenyl)acetonitril) (S11-1), das als Saatbeiz-Safener für Hirse gegen Schäden von Metolachlor bekannt ist,
   "Fluxofenim" (1-(4-Chlorphenyl)-2,2,2-trifluor-1-ethanon-O-(1,3-dioxolan-2-ylmethyl)-oxim) (S11-2), das als Saatbeiz-Safener für Hirse gegen Schäden von Metolachlor bekannt ist, und
   "Cyometrinil" oder "CGA-43089" ((Z)-Cyanomethoxyimino(phenyl)acetonitril) (S11-3), das als Saatbeiz-Safener für Hirse gegen Schäden von Metolachlor bekannt ist.
S12) Wirkstoffe aus der Klasse der Isothiochromanone (S12), wie z.B. Methyl-[(3-oxo-1H-2-benzothiopyran-4(3H)-yliden)methoxy]acetat (CAS-Reg.Nr. 205121-04-6) (S12-1) und verwandte Verbindungen aus WO-A-1998/13361.
S13) Eine oder mehrere Verbindungen aus Gruppe (S13):
   "Naphthalic anhydrid" (1,8-Naphthalindicarbonsäureanhydrid) (S13-1), das als Saatbeiz-Safener für Mais gegen Schäden von Thiocarbamatherbiziden bekannt ist,
   "Fenclorim" (4,6-Dichlor-2-phenylpyrimidin) (S13-2), das als Safener für Pretilachlor in gesätem Reis bekannt ist,
   "Flurazole" (Benzyl-2-chlor-4-trifluormethyl-1,3-thiazol-5-carboxylat) (S13-3), das als Saatbeiz-Safener für Hirse gegen Schäden von Alachlor und Metolachlor bekannt ist,
   "CL 304415" (CAS-Reg.Nr. 31541-57-8) (4-Carboxy-3,4-dihydro-2H-1-benzopyran-4-essigsäure) (S13-4) der Firma American Cyanamid, das als Safener für Mais gegen Schäden von Imidazolinonen bekannt ist,
   "MG 191" (CAS-Reg.Nr. 96420-72-3) (2-Dichlormethyl-2-methyl-1,3-dioxolan) (S13-5) der Firma Nitrokemia, das als Safener für Mais bekannt ist,
   "MG 838" (CAS-Reg.Nr. 133993-74-5) (2-propenyl 1-oxa-4-azaspiro[4.5]decan-4-carbodithioat) (S13-6) der Firma Nitrokemia
   "Disulfoton" (O,O-Diethyl S-2-ethylthioethyl phosphordithioat) (S13-7),
   "Dietholate" (O,O-Diethyl-O-phenylphosphorothioat) (S13-8),
   "Mephenate" (4-Chlorphenyl-methylcarbamat) (S13-9).
S14) Wirkstoffe, die neben einer herbiziden Wirkung gegen Schadpflanzen auch Safenerwirkung an Kulturpflanzen wie Reis aufweisen, wie z. B.
   "Dimepiperate" oder "MY-93" (S-1-Methyl-1-phenylethyl-piperidin-1-carbothioat), das als Safener für Reis gegen Schäden des Herbizids Molinate bekannt ist,
   "Daimuron" oder "SK 23" (1-(1-Methyl-1-phenylethyl)-3-p-tolyl-harnstoff), das als Safener für Reis gegen Schäden des Herbizids Imazosulfuron bekannt ist,
   "Cumyluron" = "JC-940" (3-(2-Chlorphenylmethyl)-1-(1-methyl-1-phenyl-ethyl)harnstoff, siehe JP-A-60087254), das als Safener für Reis gegen Schäden einiger Herbizide bekannt ist,
   "Methoxyphenon" oder "NK 049" (3,3'-Dimethyl-4-methoxy-benzophenon), das als Safener für Reis gegen Schäden einiger Herbizide bekannt ist,
   "CSB" (1-Brom-4-(chlormethylsulfonyl)benzol) von Kumiai, (CAS-Reg.Nr. 54091-06-4), das als Safener gegen Schäden einiger Herbizide in Reis bekannt ist.
S15) Verbindungen der Formel (S15) oder deren Tautomere,
   wie sie in der WO-A-2008/131861 und WO-A-2008/131860 beschrieben sind, 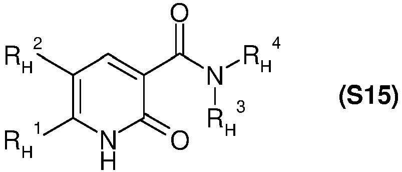
   worin
      - R_{H}¹: einen (C₁-C₆)Haloalkylrest bedeutet und
      - R_{H}²: Wasserstoff oder Halogen bedeutet und
      - R_{H}³, R_{H}⁴: unabhängig voneinander Wasserstoff, (C₁-C₁₆)Alkyl, (C₂-C₁₆)Alkenyl oder (C₂-C₁₆)Alkinyl,
      wobei jeder der letztgenannten 3 Reste unsubstituiert oder durch einen oder mehrere Reste aus der Gruppe Halogen, Hydroxy, Cyano, (C₁-C₄)Alkoxy, (C₁-C₄)Haloalkoxy, (C₁-C₄)Alkylthio, (C₁-C₄)Alkylamino, Di[(C₁-C₄)alkyl]-amino, [(C₁-C₄)Alkoxy]-carbonyl, [(C₁-C₄)Haloalkoxy]-carbonyl, (C₃-C₆)Cycloalkyl, das unsubstituiert oder substituiert ist, Phenyl, das unsubstituiert oder substituiert ist, und Heterocyclyl, das unsubstituiert oder substituiert ist, substituiert ist,
      oder (C₃-C₆)Cycloalkyl, (C₄-C₆)Cycloalkenyl, (C₃-C₆)Cycloalkyl, das an einer Seite des Rings mit einem 4 bis 6-gliedrigen gesättigten oder ungesättigten carbocyclischen Ring kondensiert ist, oder (C₄-C₆)Cycloalkenyl, das an einer Seite des Rings mit einem 4 bis 6-gliedrigen gesättigten oder ungesättigten carbocyclischen Ring kondensiert ist,
         wobei jeder der letztgenannten 4 Reste unsubstituiert oder durch einen oder mehrere Reste aus der Gruppe Halogen, Hydroxy, Cyano, (C₁-C₄)Alkyl, (C₁-C₄)Haloalkyl, (C₁-C₄)Alkoxy, (C₁-C₄)Haloalkoxy, (C₁-C₄)Alkylthio, (C₁-C₄)Alkylamino, Di[(C₁-C₄)alkyl]-amino, [(C₁-C₄)Alkoxy] -carbonyl, [(C₁-C₄)Haloalkoxy]-carbonyl, (C₃-C₆)Cycloalkyl, das unsubstituiert oder substituiert ist, Phenyl, das unsubstituiert oder substituiert ist, und Heterocyclyl, das unsubstituiert oder substituiert ist, substituiert ist,
      bedeutet oder
         - R_{H}³: (C₁-C₄)-Alkoxy, (C₂-C₄)Alkenyloxy, (C₂-C₆)Alkinyloxy oder (C₂-C₄)Haloalkoxy bedeutet und
         - R_{H}⁴: Wasserstoff oder (C₁-C₄)-Alkyl bedeutet oder
   R_{H}³ und R_{H}⁴ zusammen mit dem direkt gebundenen N-Atom einen vier- bis achtgliedrigen heterocyclischen Ring, der neben dem N-Atom auch weitere Heteroringatome, vorzugsweise bis zu zwei weitere Heteroringatome aus der Gruppe N, O und S enthalten kann und der unsubstituiert oder durch einen oder mehrere Reste aus der Gruppe Halogen, Cyano, Nitro, (C₁-C₄)Alkyl, (C₁-C₄)Haloalkyl, (C₁-C₄)Alkoxy, (C₁-C₄)Haloalkoxy und (C₁-C₄)Alkylthio substituiert ist, bedeutet.
S16) Wirkstoffe, die vorrangig als Herbizide eingesetzt werden, jedoch auch Safenerwirkung auf Kulturpflanzen aufweisen, z. B.
   (2,4-Dichlorphenoxy)essigsäure (2,4-D),
   (4-Chlorphenoxy)essigsäure,
   (R,S)-2-(4-Chlor-o-tolyloxy)propionsäure (Mecoprop),
   4-(2,4-Dichlorphenoxy)buttersäure (2,4-DB),
   (4-Chlor-o-tolyloxy)essigsäure (MCPA),
   4-(4-Chlor-o-tolyloxy)buttersäure,
   4-(4-Chlorphenoxy)buttersäure,
   3,6-Dichlor-2-methoxybenzoesäure (Dicamba),
   1-(Ethoxycarbonyl)ethyl-3,6-dichlor-2-methoxybenzoat (Lactidichlor-ethyl).

Besonders bevorzugt enthalten die lösungsmittelfreien, wasserdispergierbaren Technischen Konzentrate (TK's)
- 0,5 bis 40 Gew.-%, bevorzugt 0,5 bis 30 Gew.-%, besonders bevorzugt 0,5 bis 15 Gew.-% der Komponente a),
   - 2 bis 35 Gew.-%, bevorzugt 3 bis 30 Gew.-%, bevorzugt 5 bis 25 Gew.-% und ganz besonders bevorzugt 10 bis 20 Gew.% der Komponente b1),
   - 0,1 bis 10 Gew.-%, bevorzugt 0,3 bis 8 Gew.-% und ganz besonders bevorzugt 1 bis 7 Gew.-% der Komponente c1),
- 2 bis 35 Gew.-%, bevorzugt 3 bis 30 Gew.-%, bevorzugt 5 bis 25 Gew.-% und ganz besonders bevorzugt 10 bis 20 Gew.% der Komponente c2).

Ganz besonders bevorzugt werden diese mit einem Wirkstoff e) aus der Gruppe der Herbizide, bevorzugt der Sulfonylharnstoffe wie etwa Mesosulfuron methyl (0,5-5 Gew.-%), Iodosulfurun-methyl-sodium bzw. -säure (0,05-10 Gew.-%), Amidosulfuron (0,5-5 Gew.-%), der HPPD (4-hydroxyphenylpyruvate dioxygenase) Inhibitoren, sowie weiterer Wirkstoffe aus der Gruppe der ALS (acetolactate synthase) Hemmer wie etwa Thiencarbazone-methyl (0,2-5 Gew.-%) und/oder typischer Pigmentbleicher wie etwa Diflufenican (2-20 Gew.-%) kombiniert. Bevorzugt sind Wirkstoffe auf Basis Iodosulfuron, Amidosulfuron sowie Mesosulfuron.

Ganz besonders bevorzugt wird als c2) Kaolin oder Calziumcarbonat in Kombination mit einer Kieselsäure verwendet. Ganz besonders bevorzugt wird als c1) eine Fällungskieselsäure verwendet und ganz besonders bevorzugt wird als c2) Calziumcarbonat mit einer Fällungskieselsäure kombiniert.

Besonders bevorzugt enthalten die lösungsmittelfreien, wasserdispergierbaren Suspensionskonzentrate
- 0,5 bis 40 Gew.-%, bevorzugt 0,5 bis 30 Gew.-%, besonders bevorzugt 0,5 bis 15 Gew.-%.der Komponente a),
- 0,1 bis 10 Gew.-%, bevorzugt 0,2 bis 7 Gew.-% und ganz besonders bevorzugt 0,3 bis 4 Gew.-% der Komponente b1),
- 1 bis 15 Gew.-%, bevorzugt 2 bis 10 Gew.-% und ganz besonders bevorzugt 2,5 bis 8 Gew.-% der Komponente b2),
- 0,05 bis 10 Gew.-%, bevorzugt 0,1 bis 8 Gew.-%, bevorzugt 0,3 bis 5 und ganz besonders bevorzugt 0,5 bis 3 Gew.%. der Komponente c1),
- 0,01 bis 1,0 Gew.-%, besonders bevorzugt 0,01 bis 0,6 Gew.-%, ganz besonders bevorzugt 0,05 bis 0,5 Gew.-% und ganz besonders bevorzugt 0,1 bis 0,3 Gew.-% der Komponente d1).

Ganz besonders bevorzugt werden diese mit einem Wirkstoff e) aus der Gruppe der Herbizide, bevorzugt aus der Gruppe der Auxine wie etwa Halauxifen-methyl (0,05-5 Gew.-%) und/oder aus der Gruppe der Inhibitoren der Pigment Synthese (Pigment Bleicher, "bleacher") wie etwa Diflufenican 5-30% und aus der Gruppe der DOXP Synthase Hemmer wie etwa Clomazone sowie bevorzugt Isoxazolidinone, 2-[(2,4-dichlorophenyl)methyl]-4,4-dimethyl- (CAS Nummer 81777-95-9) und/oder aus der Gruppe der VLCFA Hemmer ("very long chain fatty acid", Hemmung der Zellteilung zur Herstellung von Fettsäuren) Flufenacet (5-30 Gew.-%) kombiniert. Bevorzugt werden Halauxifen-methyl und/oder Dilflufenikan verwendet.

Darüber hinaus können die erfindungsgemäßen SC's oder TK's oder WG's als weitere Komponenten f) gegebenenfalls noch enthalten:
Netzmittel, pH-Wert-Einstellungsmittel, Entschäumer, Biozide, Desintergrationsmittel, Haftvermittler, Frostschutzmittel, Konservierungsmittel, Farbstoffe oder Dünger, sowie von Komponente b) verschiedene Tenside.

Geeignete Entschäumer sind oberflächenaktive Verbindungen auf Silikon- bzw. Silanbasis wie die Tegopren^{®}-Produkte (Goldschmidt), die SE^{®}-Produkte (Wacker), sowie die Bevaloid^{®}- (Kemira), Rhodorsil^{®}- (Solvay) und Silcolapse^{®}-Produkte (Blustar Silicones) bevorzugt sind SE^{®}- (Wacker), Rhodorsil^{®}-und Silcolapse^{®}-Produkte, besonders bevorzugt sind z.B. Produkte wie Silcolapse^{®} 5020.

Geeignete Frostschutzmittel sind solche aus der Gruppe der Harnstoffe, Diole und Polyole, wie Ethylenglycol und Propylenglycol, Glycerin bevorzugt Propylenglycol oder Glycerin.

Geeignete Konservierungsmittel sind z.B. Produkte wie Acticide^{®} MBS (Biozid, Thor Chemie), CIT, MIT oder BIT wie etwa Proxel^{®} GXL (BIT), Acticide^{®} SPX (MIT, CIT).

Geeignete Netzmittel sind ausgewählt aus der Gruppe der Naphthalinsulfonsäuren und der Gruppe der Sulfobernsteinsäure-Derivate sowie die Salze dieser Gruppen, die einerseits Mono- und Di-Ester der Sulfobernsteinsäure enthalten sowie deren Salze (Sulfosuccinate) und andererseits alkylierte Naphthalinsulfonsäuren und deren Salze enthalten, wie beispielsweise Aerosol^{®} OTB (Dioctylsulfosuccinat), Morwet^{®} EFW (alkylierte Naphthalinsulfonate), Nekal^{®} BX (alkylierte Naphthalinsulfonate), Galoryl^{®} MT 804 (alkylierte Naphthalinsulfonate).

Bevorzugte Netzmittel sind hier die Salze der alkylierten Naphthalinsulfonsäuren und die Salze der Dioctylsulfobensteinsäure, besonders bevorzugt die Natriumsalze alkylierter Naphthalinsulfonate wie z.B. Morwet^{®} EFW, und die Natriumsalze der Dioctylsulfobensteinsäure wie z.B. Aerosol^{®} OTB.

Geeignete Haftvermittler können ausgewählt werden aus der Gruppe Polyvinylpyrrolidon (PVP), Polyvinylalkohol, Co-Polymer aus PVP und Dimethylaminoethylmethacrylat, butyliertes PVP, Co-Polymer aus Vinylchlorid und Vinylacetat, Na-Salz des Co-Polymers aus Propensufonsäure und partiell hydrolysiertem Vinylacetat, Natriumcaseinat, Phenolharze, modifizierte CelluloseTypen wie beispielsweise Luviskol^{®} (Polyvinylpyrrolidon), Mowiol^{®} (Polyvinylalkohol), modifizierte Cellulose

Bevorzugt sind Polyvinylpyrrolidon-Typen, besonders bevorzugt sind Typen von niedrigem Molekulargewicht wie Luviskol^{®} K30.

Geeignete Desintegrationsmittel können ausgewählt werden aus der Gruppe der modifizierten Kohlenhydrate, wie mikrokristalline Cellulose und quervernetzten Polyvinylpyrrolidone, wie beispielsweise Avicel^{®} PH 101 (mikrokristalline Cellulose), Agrimer^{®} XLF (quervemetztes Polyvinylpyrrolidon), Disintex^{®} 200 (quervemetztes Polyvinylpyrrolidon). Bevorzugt sind quervernetzte Polyvinylpyrrolidone, wie Agrimer^{®} XLF.

Geeignete Antischaum-Mittel können ausgewählt werden aus der Gruppe der Ester der Phosphorsäure mit niederen Alkoholen, C₆-C₁₀ Alkohole, Silicontenside (Suspoemulsionen von hydrophobisierten Kieselsäurepartikeln in wässrigen Emulsionskonzentraten auf der Basis flüssiger Silicontenside), wie Polydimethylsiloxan, sowie deren Absorbate an festes Trägermaterial wie beispielsweise Rhodorsil^{®} 432 (Silicontensid), Butylphosphat, iso-Butylphosphat, n-Octanol, Wacker ASP15 (Polydimethylsiloxan, an festem Träger absorbiert), Antischaum-Mittel^{®}SE (Polydimethylsiloxan). Bevorzugt sind Suspoemulsionen von hydrophobisierten Kieselsäurepartikeln in wässrigen Emulsionskonzentraten auf der Basis flüssiger Silicontenside, wie Antischaum-Mittel^{®} SE (Polydimethylsiloxan), und feste Antischaum-Mittel, wie Wacker ASP 15 (Polydimethylsiloxan).

Als Emulgatoren, Netzmittel und Dispergatoren kommen z.B. nichtionische Emulgatoren und Dispergatoren in Frage, z.B.:
- polyalkoxylierte, bevorzugt polyethoxylierte, gesättigte und ungesättigte aliphatische Alkohole,mit 8 bis 24 C-Atomen im Alkylrest, der sich von den entsprechenden Fettsäuren oder aus petrochemischen Produkten ableitet, und mit 1 bis 100 bevorzugt 2 bis 50, Ethylenoxideinheiten (EO), wobei die freie Hydroxy-Gruppe gegebenenfalls alkoxyliert ist, z.B. Genapol^{®} X- und Genapol^{®} O-Reihe (Clariant), Crovol^{®} M-Reihe (Croda) oder Lutensol^{®}-Reihe (BASF);
- polyalkoxylierte, bevorzugt polyethoxylierte Hydroxyfettsäuren oder Hydroxyfettsäuren enthaltene Glyceride, wie z.B. Ricinin bzw. Rizinusöl mit einem Ethoxylierungsgrad zwischen 10 und 80, bevorzugt 25 bis 40, wie z.B. Emulsogen^{®} EL-Reihe (Clariant) oder Agnique^{®} CSO-Reihe (BASF);
- polyalkoxylierte, bevorzugt polyethoxylierte Sorbitanester, wie z.B. Atplus^{®} 309 F (Croda) oder Alkamuls^{®}-Reihe (Solvay).

Bevorzugte nichtionische Emulgatoren und Dispergatoren sind z.B. polyethoxylierte Alkohole und polyethoxylierte Triglyceride, die Hydroxyfettsäuren enthalten.

Es kommen auch ionische Emulgatoren und Dispergatoren in Frage, z.B.:
- polyalkoxylierte, bevorzugt polyethoxylierte Emulgatoren/Dispergatoren, die ionisch modifiziert sind, z.B. durch Umsetzung der endständigen freien Hydroxylfunktion des Polyethylenoxidblocks zu einem Sulfat- oder Phosphatester (z.B. als Alkali- und Erdalkalimetallsalze), wie z.B. Genapol^{®} LRO oder Dispergiermittel 3618 (Clariant), Emulphor^{®} (BASF) oder Crafol^{®} AP (BASF);
- Alkali- und Erdalkalimetallsalze von Alkylarylsulfonsäuren mit linearer oder verzweigter Alkylkette, wie Phenylsulfonat CA oder Phenylsulfonat CAL (Clariant), Atlox^{®} 3377BM (Croda), Empiphos^{®} TM-Reihe (Huntsman);
- Polyelektrolyte, wie Polystyrolsulfonat oder sulfonierte ungesättigte oder aromatische Polymere (Polystyrole, Polybutadiene oder Polyterpene).

Der Anteil der gegebenenfalls zugesetzten weiteren üblichen Hilfs- und Zusatzstoffe f) in den erfindungsgemäßen Dispersionen kann bis 20 Gew.-%, bevorzugt bis 15 Gew.-% betragen.

Der Anteil der Komponente Wasser in den erfindungsgemäßen Dispersionen beträgt 20 bis 70 Gew.-%, bevorzugt 20 bis 60 Gew.-%, besonders bevorzugt 30 bis 55 Gew.-% ganz besonders bevorzugt 25 bis 45 Gew.-%.

Die Erfindung betrifft weiterhin ein herbizides Mittel, welches aus den erfindungsgemäßen SC's, TK's oder WG's durch Verdünnen mit Flüssigkeiten, bevorzugt Wasser, hergestellt werden kann.

Es kann vorteilhaft sein, den so erhaltenen herbiziden Mitteln weitere Wirkstoffe, bevorzugt agrochemische Wirkstoffe (z.B. als Tankmischpartner in Form entsprechender Formulierungen) und/oder zur Anwendung übliche Hilfs- und Zusatzstoffe, z.B. selbstemulgierende Öle wie Pflanzenöle oder Paraffinöle und/oder Düngemittel zuzugeben. Gegenstand der vorliegenden Erfindung sind daher auch solche Mittel, bevorzugt herbizide, auf Basis der erfindungsgemäßen Formulierungen.

Eine besondere Ausführungsform der Erfindung betrifft die Verwendung der aus den erfindungsgemäßen SC's, TK's oder WG's erhältlichen herbiziden Mittel zur Bekämpfung von unerwünschtem Pflanzenwuchs, im Folgenden als "herbizides Mittel" bezeichnet.

Die herbiziden Mittel weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden gut erfasst. Dabei können die herbiziden Mittel z.B. im Vorsaat-, Vorauflauf- oder Nachauflaufverfahren ausgebracht werden. Im einzelnen seien beispielhaft einige Vertreter der mono- und dikotylen Unkrautflora genannt, die durch die herbiziden Mittel kontrolliert werden können, ohne dass durch die Nennung eine Beschränkung auf bestimmte Arten erfolgen soll.

Auf der Seite der monokotylen Unkrautarten werden z.B. Apera spica venti, Avena spp., Alopecurus spp., Brachiaria spp., Digitaria spp., Lolium spp., Echinochloa spp.,Panicum spp., Phalaris spp., Poa spp., Setaria spp. sowie Bromus spp. wie Bromus catharticus, Bromus secalinus, Bromus erectus, Bromus tectorum und Bromus japonicus und Cyperusarten aus der annuellen Gruppe und auf seiten der perennierenden Spezies Agropyron, Cynodon, lmperata sowie Sorghum und auch ausdauernde Cyperusarten gut erfaßt. Bei dikotylen Unkrautarten erstreckt sich das Wirkungsspektrum auf Arten wie z.B. Abutilon spp., Amaranthus spp., Chenopodium spp., Chrysanthemum spp., Galium spp. wie Galium aparine, lpomoea spp., Kochia spp., Lamium spp., Matricaria spp., Pharbitis spp., Polygonum spp., Sida spp., Sinapis spp., Solanum spp., Stellaria spp., Veronica spp. und Viola spp., Xanthium spp., auf der annuellen Seite sowie Convolvulus, Cirsium, Rumex und Artemisia bei den perennierenden Unkräutern. Unter den spezifischen Kulturbedingungen im Reis vorkommende Schadpflanzen wie z.B. Echinochloa, Sagittaria, Alisma, Eleocharis, Scirpus und Cyperus werden von den herbiziden Mitteln ebenfalls hervorragend bekämpft. Werden die herbiziden Mittel vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der herbiziden Mittel auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so dass auf diese Weise eine für die Kulturpflanzen schädliche Unkrautkonkurrenz sehr früh und nachhaltig beseitigt wird.

Die herbiziden Mittel zeichnen sich durch eine schnell einsetzende und lang andauernde herbizide Wirkung aus. Die Regenfestigkeit der Wirkstoffe in den herbiziden Mitteln ist in der Regel günstig. Als besonderer Vorteil fällt ins Gewicht, dass die in den herbiziden Mittel verwendeten und wirksamen Dosierungen von herbiziden Verbindungen so gering eingestellt werden können, dass ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäße Kombination von Wirkstoffen wird eine erhebliche Reduzierung der nötigen Aufwandmenge der Wirkstoffe ermöglicht.

Die genannten Eigenschaften und Vorteile sind in der praktischen Unkrautbekämpfung von Nutzen, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen herbiziden Mittel hinsichtlich der beschriebenen Eigenschaften deutlich übertroffen.

Obgleich die herbiziden Mittel eine ausgezeichnete herbizide Aktivitätgegenüber mono- und dikotylen Unkräutern aufweisen, werden Kulturpflanzen wirtschaftlich bedeutender Kulturen z.B. zweikeimblättriger Kulturen wie Soja, Baumwolle, Raps, Zuckerrüben, oder Gramineen-Kulturen wie Weizen, Gerste, Roggen, Hafer, Hirse, Reis oder Mais, nur unwesentlich oder gar nicht geschädigt. Die vorliegenden herbiziden Mittel eignen sich aus diesen Gründen sehr gut zur selektiven Bekämpfung von unerwünschtem Pflanzenwuchs in landwirtschaftlichen Nutzpflanzungen oder in Zierpflanzungen.

Darüber hinaus weisen die entsprechenden herbiziden Mittel je nach Kulturpflanze hervorragende Wachstumsregulatorische Eigenschaften auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich potentiell auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen-Eigenschaften können die herbiziden Mittel -wie bereits erwähnt- auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller lnhaltsstoffe. So sind transgene Pflanzen mit erhöhtem Stärkegehalt oder veränderter Qualität der Stärke oder solche mit anderer Fettsäurezusammensetzung des Ernteguts bekannt.

Bevorzugt ist die Anwendung der herbiziden Mittel in wirtschaftlich bedeutenden transgenen Kulturen von Nutz- und Zierpflanzen, z. B. von Gramineen-Kulturen wie Weizen, Gerste, Roggen, Hafer, Hirse, Reis und Mais oder auch Kulturen von Zuckerrübe, Baumwolle, Soja, Raps, Kartoffel, Tomate, Erbse und anderen Gemüsesorten. Bevorzugt können die herbiziden Mittel in Nutzpflanzenkulturen eingesetzt werden, welche gegenüber den phytotoxischen Wirkungen der Herbizide resistent sind bzw. gentechnisch resistent gemacht worden sind.

Bei der Anwendung der herbiziden Mittel in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, bevorzugt gute Kombinierbarkeit mit den weiteren herbiziden Wirkstoffen, gegenüber denen die transgene Kultur resistent ist, sowie Beeinflussung von Wuchs und Ertrag der transgenen Kulturpflanzen.

Hierin beschrieben, jedoch nicht beansprucht ist somit auch ein Verfahren zur Bekämpfung von unerwünschtem Pflanzenwuchs, vorzugsweise in Pflanzenkulturen wie Getreide (z.B. Weizen, Gerste, Roggen, Hafer, Reis, Mais, Hirse), Zuckerrübe, Zuckerrohr, Raps, Baumwolle und Soja, besonders bevorzugt in monokotylen Kulturen wie Getreide, z.B. Weizen, Gerste, Roggen, Hafer, Kreuzungen davon wie Triticale, Reis, Mais und Hirse, dass dadurch gekennzeichnet ist, dass man die erfindungsgemäßen herbiziden Mittel auf die Schadpflanzen, Pflanzenteile, Pflanzensamen oder die Fläche auf der die Pflanzen wachsen, z.B. die Anbaufläche, appliziert. Die Pflanzenkulturen können auch gentechnisch verändert oder durch Mutationsselektion erhalten sein und sind bevorzugt tolerant gegenüber Acetolactatsynthase (ALS)-Inhibitoren.

Mit den erfindungsgemäßen WGs sowie SCs kann bei gleicher Aufwandmenge eine bessere biologische Wirkung erzielt werden. Vorteilhafterweise zeigen die erfindungsgemäßen SC's, TK's oder WG's eine ausgezeichnete Pflanzenverträglichkeit wie eine reduzierte Neigung phytotoxische Schäden zu verursachen.

Daneben haben die erfindungsgemäßen SC's, TK's oder WG's als spezielle Wirkstoff-Kombinations-Formulierungen (synonym: Mischungs-Formulierungen, Co-Formulierungen) weitere Vorteile, wie z.B. ein geringerer Verpackungsaufwand als bei Verwendung der Einzelwirkstoffe, wodurch sich der Aufwand für Herstellung, Transport und Lagerung vereinfacht und die Zubereitung der in der Landwirtschaft eingesetzten Spritzbrühen durch die kleineren Mengen und die bereits eingestellten, wirksamen Mengenverhältnisse besser gehandhabt werden können, wie z.B. beim Mess- und Verrührvorgang.

Die erfindungsgemäßen SC's, TK's oder WG's zeigen zusätzlich überraschenderweise hervorragende dispergierende und stabilisierende Eigenschaften nach dem weiteren Verdünnen mit Flüssigkeiten, bevorzugt Wasser.

Daneben ergeben die SC's, TK's oder WG's Langzeit-lagerstabile und anwendungstechnisch einwandfreie Formulierungen.

Eine weitere bevorzugte Ausführungsform ist die Verwendung der erfindungsgemäßen SC's, TK's oder WG's als Wachstumsregulator (Phytotonic). Bevorzugt werden diese Kombinationen eingesetzt um das "greening" der Pflanze zu verbessern

Pflanzenwachstumsregulatoren können verschiedene Wirkungen auf Pflanzen ausüben. Die Wirkung der Substanzen hängt im Wesentlichen vom Zeitpunkt der Applikation relativ zum Entwicklungsstadium der Pflanze und auch von den Wirkstoffmengen, die auf die Pflanzen oder ihre Umwelt ausgebracht werden und von der Ausbringungsart ab. In jedem Fall sollten Wachstumsregulatoren eine bestimmte gewünschte Wirkung auf die Kulturpflanzen ausüben.

Zu den wachstumsregulierenden Wirkungen zählen frühere Keimung, besseres Auflaufen, stärker entwickeltes Wurzelsystem und/oder verbessertes Wurzelwachstum, verstärkte Bestockungsfähigkeit, produktivere Bestockungstriebe, frühere Blüte, erhöhte Pflanzenhöhe und/oder Biomasse, Stängelverkürzung, Verbesserungen des Sproßwachstums, Anzahl Körner/Ähre, Anzahl Ähren/m², Anzahl Stolonen und/oder Anzahl Blüten, erhöhter Harvest Index, größere Blätter, weniger tote Basalblätter, verbesserte Phyllotaxie, frühere Reife/frühere Fruchtausbildung, homogene Reife, erhöhte Kornfüllungsdauer, bessere Fruchtausbildung, größere Frucht/Gemüsegröße, Sproßresistenz und verringerte Lagerung.

Erhöhter oder verbesserter Ertrag bezieht sich auf Gesamtbiomasse pro Hektar, Ertrag pro Hektar, Korn/Fruchtgewicht, Samengröße und/oder Hektolitergewicht sowie auf verbesserte Produktqualität, was Folgendes umfasst:
verbesserte Verarbeitbarkeit bezüglich Größenverteilung (Kern, Frucht usw.), homogene Reife, Kornfeuchtigkeit, besseres Mahlen, bessere Weinbereitung, besseres Brauen, erhöhter Saftertrag, erhöhte Erntbarkeit, erhöhte Verdaulichkeit, erhöhter Sedimentationswert, erhöhte Fallzahl, erhöhte Schotenstabilität, erhöhte Lagerstabilität, verbesserte Faserlänge/Stärke/Einheitlichkeit, Erhöhung der Milch- und/oder Fleischqualität von mit Silage gefütterten Tieren, Anpassung an Kochen und Braten;
weiterhin umfassend bessere Vermarktbarkeit in Bezug auf erhöhte Frucht-/Kornqualität, Größenverteilung (Kern, Frucht usw.), erhöhte Lagerfähigkeit/Haltbarkeit, Festigkeit/Weiche, Geschmack (Aroma, Textur, usw.), Klasse (Größe, Form, Anzahl Beeren usw.), Anzahl Beeren/Früchte pro Traube, Knackigkeit, Frische, Wachsbedeckung, Häufigkeit von physiologischen Störungen, Farbe usw.;
weiterhin umfassend Erhöhung der gewünschten Bestandteile wie z.B. Proteingehalt, Fettsäuren, Ölgehalt, Ölqualität, Aminosäurezusammensetzung, Zuckergehalt, Säuregehalt (pH-Wert), Zucker/Säure-Verhältnis (Brix), Polyphenole, Stärkegehalt, Nährwert, Glutengehalt/Index, Energiegehalt, Geschmack usw.;
und weiterhin umfassend eine Verringerung an unerwünschten Bestandteilen wie z.B. weniger Mycotoxine, weniger Aflatoxine, Geosmingehalt, Phenolaromen, Laccase, Polyphenoloxidasen und Peroxidasen oder Nitratgehalt.

Pflanzenwachstumsregulierende Formulierungen können zum Beispiel dazu verwendet werden, um das vegetative Wachstum der Pflanzen zu verlangsamen. Solch eine Unterdrückung des Wachstums ist von wirtschaftlichem Interesse zum Beispiel bei Gräsern, da es dadurch möglich ist, die Häufigkeit des Rasenschnitts in Ziergärten, Parks und Sportanlagen, an Straßenrändern, auf Flughäfen oder in Fruchtkulturen zu verringern. Ebenfalls von Wichtigkeit ist die Hemmung des Wachstums von krautigen und holzigen Pflanzen an Straßenrändern und in der Nähe von Rohrleitungen oder oberirdischen Kabeln, oder ganz allgemein dort, wo kräftiger Pflanzenwuchs unerwünscht ist.

Ebenfalls von Wichtigkeit ist die Verwendung von Wachstumsregulatoren zur Hemmung des Längenwachstums von Getreide. Dies reduziert bzw. eliminiert vollständig das Risiko des Lagerns der Pflanzen vor der Ernte. Außerdem können Wachstumsregulatoren bei Getreide den Halm stärken, was ebenfalls dem Lagern entgegenwirkt. Der Einsatz von Wachstumsregulatoren zum Verkürzen und Stärken der Halme gestattet die Ausbringung von höheren Düngermengen, um den Ertrag zu erhöhen, ohne dass ein Lagerrisiko der Getreidekultur besteht.

Bei vielen Kulturpflanzen gestattet die Unterdrückung des vegetativen Wachstums eine größere Pflanzendichte, und es ist daher möglich, höhere Beträge in Bezug auf die Bodenoberfläche zu erzielen.

Ein weiterer Vorteil der auf diese Art und Weise erhaltenen kleineren Pflanzen besteht darin, dass die Kultur leichter zu kultivieren und zu ernten ist.

Die Verringerung des vegetativen Pflanzenwachstums kann auch zu erhöhten oder verbesserten Erträgen führen, da die Nährstoffe und Assimilate von größerem Nutzen für Blüten- und Fruchtbildung als für die vegetativen Teile der Pflanzen sind.

Alternativ dazu können Wachstumsregulatoren auch dazu verwendet werden, um das vegetative Wachstum zu fördern. Dies ist dann von großem Nutzen, wenn die vegetativen Pflanzenteile geerntet werden. Die Förderung des vegetativen Wachstums kann jedoch auch das generative Wachstum insofern fördern, als mehr Assimilate gebildet werden, was zu mehr oder größeren Früchten führt.

Weiterhin lassen sich nutzbringende Wirkungen auf das Wachstum oder den Ertrag durch eine verbesserte Nährstoffverwertung, insbesondere Stickstoff (N)-Verwertung, Phosphor(P)-Verwertung, Wasserverwertung, verbesserte Transpirations-, Respirations- und/oder CO2-Assimilationsrate, bessere Knöllchenbildung, einen verbesserten Ca-Metabolismus usw. erzielen.

Ebenso können Wachstumsregulatoren dazu verwendet werden, um die Zusammensetzung der Pflanzen zu verändern, was wiederum zu einer Verbesserung der Qualität des Ernteguts führen kann. Unter dem Einfluss von Wachstumsregulatoren können parthenokarpe Früchte gebildet werden. Außerdem ist es möglich, das Geschlecht der Blüten zu beeinflussen. Es ist auch möglich, sterilen Pollen zu produzieren, was von großer Wichtigkeit in der Züchtung und Produktion von Hybridsaatgut ist.

Die Verwendung von Wachstumsregulatoren kann die Verzweigung der Pflanzen kontrollieren. Einerseits kann man durch Brechen der Apikaldominanz die Entwicklung von Nebentrieben fördern, was insbesondere beim Anbau von Zierpflanzen, auch in Kombination mit einer Wachstumshemmung, sehr erwünscht sein kann. Andererseits kann man jedoch auch das Wachstum der Nebentriebe hemmen. Diese Wirkung ist zum Beispiel beim Anbau von Tabak oder beim Anbau von Tomaten von besonderem Interesse.

Unter dem Einfluss von Wachstumsregulatoren kann die Menge an Blättern an der Pflanze derart kontrolliert werden, dass eine Entlaubung der Pflanzen zu einem bestimmten Zeitpunkt erfolgt. Solch eine Entlaubung spielt bei der mechanischen Ernte von Baumwolle eine wesentliche Rolle, ist jedoch auch bei der Ernteerleichterung in anderen Kulturen, zum Beispiel im Weinbau, von Interesse. Die Entlaubung der Pflanzen kann auch vorgenommen werden, um die Transpiration der Pflanzen zu erniedrigen, bevor sie umgesetzt werden.

Weiterhin können Wachstumsregulatoren die Pflanzenseneszenz modulieren, was zu einer verlängerten Dauer der grünen Blattfläche, einer längeren Kornfüllungsphase, einer verbesserten Ertragsqualität usw. führen kann.

Ebenso können Wachstumsregulatoren zum Regulieren des Fruchtfalls verwendet werden. Einerseits ist es möglich, vorzeitigen Fruchtfall zu verhindern. Andererseits ist es auch möglich, Fruchtfall, ja sogar den Blütenabwurf, zu fördern, um eine gewünschte Masse zu erzielen ("Ausdünnen"). Zusätzlich ist es möglich, Wachstumsregulatoren zum Erntezeitpunkt einzusetzen, um die Kraft, die erforderlich ist, um die Früchte abzulösen, zu reduzieren, um ein mechanisches Beernten zu gestatten oder um die Ernte von Hand zu erleichtern.

Wachstumsregulatoren können auch dazu verwendet werden, um eine schnellere oder auch verzögerte Abreife des Ernteguts vor oder nach der Ernte zu erzielen. Dies ist besonders vorteilhaft, als es eine optimale Einstellung auf die Erfordernisse des Markts gestattet. Weiterhin können Wachstumsregulatoren in manchen Fällen die Fruchtfärbung verbessern. Zusätzlich können Wachstumsregulatoren auch dazu verwendet werden, um die Abreife innerhalb eines bestimmten Zeitraums zu synchronisieren. Dies bildet die Voraussetzung für eine vollständige mechanische Beerntung oder Ernte von Hand in einem einzigen Arbeitsgang, zum Beispiel bei Tabak, Tomaten oder Kaffee.

Durch die Verwendung von Wachstumsregulatoren ist es zusätzlich möglich, die Samen- oder Knospenruhe der Pflanzen derart zu beeinflussen, dass Pflanzen wie Ananas oder Zierpflanzen in Gärtnereien zum Beispiel dann keimen, sprießen oder blühen, wenn sie normalerweise nicht dazu tendieren würden. Dort, wo ein Frostrisiko besteht, kann es wünschenswert sein, die Knospenbildung oder Keimung von Samen mit Hilfe von Wachstumsregulatoren zu verzögern, um Spätfrostschäden zu vermeiden.

Schließlich können Wachstumsregulatoren eine Resistenz der Pflanzen gegenüber Frost, Trockenheit oder hohen Salzgehalt des Bodens induzieren. Dies gestattet den Anbau von Pflanzen in Regionen, die sich normalerweise nicht zu diesem Zweck eignen.

Die erfindungsgemäßen Formulierungen üben auch eine starke Kräftigungswirkung auf Pflanzen aus. Demgemäß können sie zum Mobilisieren der Abwehrkräfte der Pflanze gegen Befall durch unerwünschte Mikroorganismen verwendet werden. Pflanzenkräftigende (resisistenzinduzierende) Substanzen sind im vorliegenden Zusammenhang Substanzen, die fähig sind, das Abwehrsystem von Pflanzen so zu stimulieren, dass bei den behandelten Pflanzen, wenn sie anschließend mit unerwünschten Mikroorganismen inokuliert werden, ein hohes Ausmaß an Resistenz gegen diese Mikroorganismen entsteht.

Weiterhin umfassen pflanzenphysiologische Wirkungen im Zusammenhang mit der vorliegenden Erfindung die Folgenden:
Toleranz von abiotischem Stress, einschließlich Toleranz gegen hohe oder niedrige Temperaturen, Trockenheitstoleranz und Erholung nach Trockenstress, Wassernutzung (die mit reduzierter Wasseraufnahme korreliert ist), Staunässe-toleranz, Ozonstress und UV-Toleranz, Toleranz gegen Chemikalien wie Schwermetalle, Salze, Pestizide usw.

Toleranz von biotischem Stress, einschließlich erhöhter Pilzresistenz und erhöhter Resistenz gegen Nematoden, Viren und Bakterien. Im Zusammenhang mit der vorliegenden Erfindung umfasst die Toleranz gegen biotischen Stress vorzugsweise erhöhte Pilzresistenz und erhöhte Resistenz gegen Nematoden.

Erhöhte Pflanzenwüchsigkeit, einschließlich Pflanzengesundheit/Pflanzenqualität und Triebkraft von Saatgut, reduzierten Umfallens, verbesserten Erscheinungsbilds, verbesserten Erholens nach Stressperioden, verbesserter Pigmentierung (z.B. Chlorophyllgehalt, Stay-Green-Wirkungen, usw.) und verbesserter Photosyntheseeffizienz.

Beschrieben, jedoch nicht beansprucht ist demnach die Verwendung der erfindungsgemäßen SC's, TK's oder WG's zur Steigerung der Widerstandsfähigkeit von Pflanzen gegenüber abiotischen Stressfaktoren, bevorzugt gegenüber Trockenstress, insbesondere zur Stärkung des Pflanzenwachstums und/oder zur Erhöhung des Pflanzenertrags.

Die weiter oben genannten verschiedenartigen Vorteile für Pflanzen lassen sich bekannterweise partiell zusammenfassen und mit allgemein gültigen Begriffen belegen. Soche Begriffe sind beispielsweise die nachfolgend aufgeführten Bezeichnungen: phytotonischer Effekt, Widerstandsfähigkeit gegenüber Stressfaktoren, weniger Pflanzenstress, Pflanzengesundheit, gesunde Pflanzen, Pflanzenfitness, ("Plant Fitness"), "Plant Wellness", "Plant Concept", "Vigor Effect", "Stress Shield", Schutzschild, "Crop Health", "Crop Health Properties", "Crop Health Products", "Crop Health Management", "Crop Health Therapy", "Plant Health", Plant Health Properties", Plant Health Products", "Plant Health Management", "Plant Health Therapy", Grünungseffekt ("Greening Effect" oder "Re-greening Effect"), "Freshness" oder andere Begriffe, die einem Fachmann durchaus bekannt sind.

Beschrieben, jedoch nicht beansprucht weiterhin ein Verfahren zur Behandlung von Saatgut. Im nachfolgenden wird zusammenfassend für erfindungsgemäße SC's, TK's oder WG's von erfindungsgemäßen Formulierungen gesprochen.

Ein weiterer beschriebener, jedoch nicht beanspruchter Aspekt betrifft insbesondere Saatgut (im Ruhestadium, nach Priming, vorgekeimt, oder sogar mit entwickelten Wurzeln und Blättern), die mit den erfindungsgemäßen Formulierungen behandelt worden sind. Die beschriebenen, jedoch nicht beanspruchten Saatgüter werden in Verfahren zum Schützen von Saatgütern und Pflanzen, die sich aus den Saatgütern entwickelt haben, gegen phytopathogene Schadpilze verwendet. In diesen Verfahren wird Saatgut, das mit erfindungsgemäßen Formulierungen behandelt worden ist, verwendet.

Die erfindungsgemäßen Formulieungen eignen sich auch für die Behandlung von Samen und jungen Keimlingen. Ein Großteil des Schadens an Kulturpflanzen, der durch Schadorganismen verursacht wird, wird durch Infektion der Samen vor dem Aussäen oder nach dem Keimen der Pflanze ausgelöst. Diese Phase ist insbesondere besonders kritisch, da die Wurzeln und Sprossen der wachsenden Pflanze besonders empfindlich sind, und sogar kleine Schäden zum Absterben der Pflanze führen können. Es besteht daher ein großes Interesse darin, den Samen und die keimende Pflanze dadurch zu schützen, dass man entsprechende Zusammensetzungen verwendet.

Es ist auch wünschenswert, die Menge des verwendeten Wirkstoffs zu optimieren, um den bestmöglichen Schutz für die Samen, die keimenden Pflanzen und die gebildeten Keimpflanzen gegen Befall durch phytopathogene Pilze zu schützen, ohne jedoch die Pflanzen selbst durch den verwendeten Wirkstoff zu schädigen. Insbesondere sollten Verfahren für die Saatgutbehandlung die intrinsischen Phänotypen von transgenen Pflanzen berücksichtigen, um einen optimalen Schutz des Samens und der keimenden Pflanze mit einem Minimum an eingesetzten Pflanzenschutzmitteln zu erzielen.

Beschrieben, jedoch nicht beansprucht ist daher auch ein Verfahren zum Schützen von Saatgut, keimenden Pflanzen und gebildeten Keimpflanzen gegen Befall durch tierische Schädlinge und/oder phytopathogene Schadmikroorganismen durch Behandeln der Samen mit einer erfindungsgemäßen Formulierung. Beschrieben, jedoch nicht beansprucht ist die Verwendung der erfindungsgemäßen Formulierung für die Saatgutbehandlung zum Schutz der Samen, der keimenden Pflanzen und der gebildeten Keimpflanzen gegen tierische Schädlinge und/oder phytopathogene Mikroorganismen. Beschrieben, jedoch nicht beansprucht ist weiterhin Saatgut, das mit einer erfindungsgemäßen Formulierung zum Schutz gegen tierische Schädlinge und/oder phytopathogene Mikroorganismen behandelt worden ist.

Einer der Vorteile der vorliegenden Erfindung ist, dass die Behandlung der Samen mit diesen Formulierungen nicht nur den Samen selbst, sondern auch die entstandenen Pflanzen nach dem Auflaufen, gegen tierische Schädlinge und/oder phytopathogene Schadmikroorganismen schützt. Auf diese Weise schützt die unmittelbare Behandlung der Kultur zum Zeitpunkt des Aussäens oder kurz danach Pflanzen gleich wie die Saatgutbehandlung vor dem Aussäen. Es gilt auch als vorteilhaft, dass die erfindungsgemäßen Formulierungen speziell auch für transgenes Saatgut verwendet werden können, und in diesem Fall ist die Pflanze, die aus diesem Saatgut heranwächst, fähig, ein Protein zu exprimieren, das gegen Schädlinge, Herbizidschaden oder abiotischen Stress wirkt. Die Behandlung von solchen Saatgütern mit erfindungsgemäßen Formulierungen, zum Beispiel einem insektiziden Protein, kann zur Bekämpfung von bestimmten Schädlingen führen. Überraschenderweise kann hier eine weitere synergistische Wirkung beobachtet werden, die die Wirksamkeit für das Schützen gegen Befall durch Schädlinge, Mikroorganismen, Unkräuter oder abiotischen Stress zusätzlich erhöht.

Die erfindungsgemäßen Formulierungen eignen sich für das Schützen von Saatgut von beliebigen Pflanzensorten, die in der Landwirtschaft, im Gewächshaus, in Forsten oder im Gartenbau verwendet werden. Insbesondere handelt es sich bei dem Saatgut um Saatgut von Getreide (wie Weizen, Gerste, Roggen, Hirse und Hafer), Raps, Mais, Baumwolle, Sojabohne, Reis, Kartoffeln, Sonnenblume, Bohnen, Kaffee, Rübe (z.B. Zuckerrübe und Futterrübe), Erdnuss, Gemüse (wie Tomate, Gurke, Zwiebeln und Salat), Rasen und Zierpflanzen. Besondere Bedeutung kommt der Behandlung des Saatguts von Weizen, Sojabohne, Raps, Mais und Reis zu. Besonder bevorzugt ist Weizen.

Wie ebenfalls unten beschrieben kommt der Behandlung von transgenem Saatgut mit den erfindungsgemäßen Formulierungen besondere Bedeutung zu. Dies betrifft das Saatgut von Pflanzen, die mindestens ein heterologes Gen enthalten, das die Expression eines Polypeptids oder Proteins, z.B. mit insektiziden Eigenschaften, gestatten. Diese heterologen Gene in transgenen Saatgütern können zum Beispiel von Mikroorganismen der Gattungen Bacillus, Rhizobium, Pseudomonas, Serratia, Trichoderma, Clavibacter, Glomus oder Gliocladium stammen. Diese heterologen Gene stammen vorzugsweise aus Bacillus sp., und in diesem Fall ist das Genprodukt gegen den Maiszünsler und/oder den Westlichen Maiswurzelwurm wirksam. Besonders bevorzugt stammen die heterologen Gene aus Bacillus thuringiensis.

Im Zusammenhang mit der vorliegenden Erfindung wird die erfindungsgemäße Formulierung entweder allein oder in einer geeigneten Formulierung auf Saatgüter ausgebracht. Vorzugsweise wird das Saatgut in einem Zustand behandelt, in dem es ausreichend stabil ist, so dass während der Behandlung keine Schädigung erfolgt. Im Allgemeinen können Saatgüter zu einem beliebigen Zeitpunkt zwischen der Ernte und eine gewisse Zeit nach dem Säen behandelt werden. Es ist üblich, Saatgut zu verwenden, das von der Pflanze getrennt worden ist und das von Kolben, Schalen, Stängeln, Hüllen, Haaren oder dem Fleisch der Früchte frei ist. So ist es zum Beispiel möglich, Saatgut zu verwenden, das geerntet, gereinigt und auf den Feuchtigkeitsgehalt von weniger als 15 Gew.-% heruntergetrocknet worden ist. Alternativ dazu ist es auch möglich, Saatgut, das nach dem Trocknen zum Beispiel mit Wasser behandelt worden ist und dann zurückgetrocknet wurde, oder Samen unmittelbar nach dem Priming, oder Samen, die im Zustand nach dem Priming oder als vorgekeimte Samen aufbewahrt wurden, oder Samen, die auf Pflanzschalen, -bänder oder -papier ausgesät worden sind, zu verwenden.

Die erfindungsgemäßen Formulierungen können dazu verwendet werden, um verschiedenste unterschiedliche Arten von Saatgut zu behandeln, entweder direkt oder nach vorheriger Verdünnung mit Wasser. So zum Beispiel können die Konzentrate oder die von ihnen durch Verdünnen mit Wasser erhältlichen Präparate dazu verwendet werden, um Saatgut von Getreide, wie Weizen, Gerste, Roggen, Hafer und Triticale, sowie Saatgüter von Mais, Sojabohne, Reis, Raps, Erbsen, Bohnen, Baumwolle, Sonnenblumen und Rüben oder auch verschiedenste unterschiedliche Gemüsesaatgüter zu beizen. Die erfindungsgemäßen Formulierungen oder ihre verdünnten Präparate können such für Saatgüter von transgenen Pflanzen verwendet werden. In diesem Fall können bei Interaktion mit den durch Expression gebildeten Substanzen noch zusätzliche synergistische Wirkungen auftreten.

Für die Behandlung von Saatgütern mit den erfindungsgemäßen Formulierungen oder ihren durch Zugabe von Wasser hergestellten Präparaten eignen sich alle Mischeinheiten, die üblicherweise für Applikationen auf das Saatgut verwendet werden können. Spezifisch besteht die Vorgehensweise bei Applikationen auf das Saatgut darin, die Samen in ein Mischgerät vorzulegen, die jeweilig gewünschte Menge der Formulierungen, entweder als solche oder nach vorherigem Verdünnen mit Wasser, zuzugeben und dann alles zu mischen, bis alle applizierten Formulierungen homogen auf den Samen verteilt sind. Gegebenenfalls schließt sich hieran eine Trocknung an.

Die Aufwandmenge der erfindungsgemäßen Formulierungen kann innerhalb eines relativ breiten Bereichs schwanken. Sie hängt von dem jeweiligen Wirkstoffgehalt in den Formulierungen und von den Saatgütern ab. Die Aufwandmenge von jedem Einzelwirkstoff liegt üblicherweise zwischen 0,001 und 15 g pro Kilogramm Saatgut, vorzugsweise zwischen 0,01 und 5 g pro Kilogramm Saatgut.

Eine weitere beschriebene, jedoch nicht beanspruchte Ausführungsform ist die Verwendung zur Saatgutbehandlung der erfindungsgemäßen Formulierungen.

Die Erfindung wird durch die Beispiele näher erläutert.

### Beispiele und Vergleichsbeispiele:

### Verwendete Einsatzstoffe:

Die in den nachfolgenden Beispielen verwendeten Begriffe haben folgende Bedeutung:

| | |
|---|---|
| Mefenpyr-diethyl | Diethyl (*RS*)-1-(2,4-dichlorophenyl)-5-methyl-2-pyrazoline-3,5-dicarboxylate, (Bayer CropScience AG), Schmelzbereich 50-55°C |
| Flufenacet | 4'-Fluoro-N-isopropyl-2-(5-trifluoromethyl-1,3,4-thiadiazol-2-yloxy)acetanilide (Bayer CropScience AG) |
| Iodosulfuron-methyl | ({[5-Iodo-2-(methoxycarbonyl)phenyl] sulfonyl } carbamoyl)(4-methoxy-6-methyl-1,3,5-triazin-2-yl) azanide (Bayer CropScience AG) |
| Mesosulfuron-methyl | Methyl 2-[(4,6-dimethoxypyrimidin-2-ylcarbamoyl)sulfamoyl]-α-(methanesulfonamido)-p-toluate (Bayer CropScience AG) |
| Diflufenican | 2',4'-Difluoro-2-(α,α,α-trifluoro-m-tolyloxy)nicotinanilide (Bayer CropScience AG) |
| Cloquintocet-mexyl | (RS)-1-Methylhexyl (5-chloroquinolin-8yloxy)acetate , Schmelzbereich 60-70°C |
| Halauxifen-methyl | Methyl 4-amino-3-chloro-6-(4-chloro-2-fluoro-3-methoxyphenyl)pyridine-2-carboxylate (CAS Nummer: 943831-98-9) |
| Morwet^{®} D-425 | Naphthalinsulfonsäure-formaldehyd-kondensat Natriumsalz (Akzo Nobel) |
| Morwet^{®} IP | Diisopropyl-naphthalinsulfonsäure, Natriumsalz (Akzo Nobel) |
| Pluronic^{®} PE 10500 | Propylenoxid-Ethylenoxid-(PO-EO)-Blockpolymer (BASF) |
| Citronensäure | mehrbasige organische Säure |
| Rhodopol^{®} 23 | Xanthan Derivat (Solvay) |
| Silcolapse^{®} 411 | Silikon-Entschäumer (Solvay) |
| Silfoam^{®} SE 2 | Silikon-Entschäumer (Wacker) |
| Glycerin | Frostschutzmittel |
| Proxel^{®} GXL | Konservierungsmittel (Biozid, Proxel) |
| Kaolin TEC1 | Aluminiumhydrosilicat |
| Sipernat^{®} 22S | Fällungskieselsäure |
| Sokalan^{®} K30 | Polyvinylpyrrolidon, nicht-ionisches Dispergiermittel |
| Solvesso 200 ND | Mineralöl, ExxonMobil, Naphthalinfrei |
| Calsogen^{®} 4814 | Calcium-dodecylbenzolsulphonate in 2-Ethylhexanol (ca. 40%), Clariant |
| Emulsogen^{®} 3510 | nichtionisches Tensid, n-butyl-PO-EO block oxalkylate, Clariant |

### Prüf- und Lagerverfahren:

Alle Tests wurden nach dem im Pflanzenschutz üblichen CIPAC Methoden durchgeführt (CIPAC = Collaborative International Pesticides Analytical Council; www.cipac.org). Die Langzeitlagerung wurde nach CIPAC MT 46.3 bei 8 Wochen 40°C Lagerungszeit durchgeführt. Die nachfolgend verwendeten Begriffe haben folgende Bedeutung. Wenn nicht anders angegeben wird 1*%* in Wasser (CIPAC D, 342 ppm Wasserhärte) bei 23°C getestet.
- 0TW = Prüfergebnis nach Null Tagen Lagerung;
- 8W40 = Prüfergebnis des beschleunigten Lagerungstest (8 Wochen 40°C) zur Überprüfung der Langzeitstabilität eines Formulierungsprodukts;
- Suspendierbarkeit = Wirkstoff-Verteilung in einer 1% wässrigen Lösung (100% = vollständig homogen verteilt, 0% = vollständig sedimentiert); Werte < 100% führen zu unheitlicher Produktverteilung nach Applikation; gemäß internationalen Anforderungen müssen Formulierungsprodukte Werte > 60% aufweisen;
- Suspendierbarkeit 8W40 = Wert nach 8 Wochen 40°C Lagerung;
- D90 = Wirkstoff-Partikelgröße (Laserstreuung 90% aller Volumenpartikel);
- D90 8W40 = Wirkstoff-Partikelgröße nach Lagerungstest (8 Wochen 40°C); Eine Erhöhung der Werte deutet auf Kristallwachstum hin, wobei eine Erhöhung um den Faktor 2 meist noch akzeptabel ist; mehr als ein Faktor 4 unakzeptabel ist;
- Sediment = Werte > 10% kennzeichnen starke Bodensatz-Bildung.
- Sediment aufschüttelbar = Ja für akzeptabel; Nein für unbrauchbare Formulierungsprodukte, da Wirkstoffe nicht mehr in eine Spritzbrühe überführt werden können;
- Nasssiebung = Maß für mögliche Filterverstopfungen bei der Spritz-Applikation; Werte >0,1 % auf einem 150 µm Sieb sowie > 0,2 % auf (jeweils bezogen auf die eingesetzte Menge an Formulierung) einem 45 µm Sieb sind nicht akzeptabel.

### Herstellung eines wässrigen Suspensionskonzentrats B:

Zur Herstellung der in Tabelle 1 genannten Beispiele wird zunächst Wasser bei Raumtemperatur vorgelegt. Unter Rühren werden anschließend a) (und gegebenenfalls weitere Wirkstoffe e) sowie die weiteren Komponenten b), c) und f) hinzugegeben (ohne besondere Reihenfolge), a) wird dabei warm (65°C im Falle von Mefenpyr-diethyl bzw. 80°C im Falle von Cloquintocet-mexyl) zugegeben und es wird 2 bis 24 h gerührt, bis sich Kristalle bilden. Anschließend erfolgt eine Nassvermahlung beispielsweise mittels einer Perlmühle. Abschließend wird der organische Verdicker (Komponente d1) zugegeben.

In einer alternativen Variante wird statt Wasser bei Raumtemperatur, Wasser bei 5°C verwendet. Auch wird das Gefäß auf 5°C herunter gekühlt. Es erfolgt eine Vorzerkleinerung mit einer Kolloidmühle. Es konnte so in einer halben Stunde eine Kristallisation erreicht werden. Anschließend erfolgt eine Nassvermahlung beispielsweise mittels einer Perlmühle.

**Tabelle 1: Angaben erfolgen in Gewichtsprozent, Gew.-%**

| **Komponente** | | **Beispiel-Nr.** | | | | | | |
|---|---|---|---|---|---|---|---|---|
| | | **1** | **2** | **3** | **V3** | **V4** | **V5** | |
| **a** | Mefenpyr-diethyl | 1,15 | | 27,27 | 1,15 | 27,27 | 27,27 | |
| **a** | Cloquintocet-mexyl | | 1,15 | | | | | |
| **e** | Diflufenican | 15,3 | 15,3 | | 15,3 | | | |
| **e** | Halauxifen-methyl | 1,15 | 1,15 | | 1,15 | | | |
| **e** | Flufenacet | 25,4 | 25,4 | | 25,4 | | | |
| **b1** | Morwet^{®} D-425 | 1,0 | 1,0 | 1,0 | 1,0 | 1,0 | 1,0 | |
| **b2** | Pluronic^{®}PE 10500 | 5 | 5 | 5 | 5 | 5 | 5 | |
| **f** | Citronensäure | 0,1 | 0,1 | 0,1 | 0,1 | 0,1 | 0,1 | |
| **c1** | Aerosil^{®} 200 | 0,5 | 0,5 | 0,5 | | 0 | 0,5 | |
| **d** | Rhodopol^{®} 23 | 0,2 | 0,2 | 0,2 | 0,2 | 0,2 | 0 | |
| **f** | Silcolapse^{®} 411 | 0,5 | 0,5 | 0,5 | 0,5 | 0,5 | 0,5 | |
| **f** | Glycerin | 5 | 5 | 5 | 5 | 5 | 5 | |
| **f** | Proxel^{®} GXL | 0,18 | 0,18 | 0,18 | 0,18 | 0,18 | 0,18 | |
| **Wasser** | | 44,72 | 44,72 | 59,25 | 45,22 | 58,75 | 58,45 | |
| Gesamt: | | 100 | 100 | 100 | 100 | 100 | 100 | |

### Vergleichsbeispiele:

In V3 im Vergleich zu 1 bzw. in V4 im Vergleich zu 3 fehlt jeweils c1). Es bildet sich ein amorphes Mefenpyr-diethyl in den Formulierungen, das nicht weiter verarbeitet werden kann. Die Formulierungen sind nicht lagerstabil und mussten verworfen werden. In V5 ohne den organischen Verdicker d1) kam es ebenfalls zu lagerinstabilen Produkten, die verworfen wurden.

### Stabilität der wässrigen Dispersion:

Die erfindungsgemäßen Dispersionen der Beispiele weisen eine ausgezeichnete Lagerstabilität auf. Sie sind bei Raumtemperatur mindestens 2 Jahre und bei 40°C mindestens 3 Monate ohne erkennbare Veränderung stabil.

**Tabelle 2: Lagerstabilität und weitere Formulierungseigenschaften der Suspensionskonzentrate 1-3:**

| **Testmethode** | **CIPAC Prüfnorm** | **Beispiele** | | |
|---|---|---|---|---|
| | | **1** | **2** | **3** |
| chemischer Abbau des Wirkstoffs 8W40 | interne analytische Methode | nein | nein | nein |
| Suspendierbarkeit 0TW % | MT 184 | 95 | 96 | 100 |
| Suspendierbarkeit 8W40 % | MT 184 | 75 | 85 | 95 |
| D90 in µm0TW | MT 187 | 4 | 7 | 4 |
| D90 in µm 8W40 | MT 187 | 9 | 10 | 8 |
| Sediment, 8W40 | MT 148 | nein | nein | nein |
| Nasssiebung 45 % 8W40 | MT 185 | 0,02 | 0,02 | 0,02 |
| Nasssiebung 150 % 8W40 | MT 185 | 0,01 | 0,01 | 0,01 |

Alle erfindungsgemäßen Formulierungen zeigen eine sehr gute Lagerstabilität. Es konnte kein amorpher Wirkstoff im Mikroskop identifiziert werden.

### Herstellung eines erfindungsgemäßen Teilkonzentrats A)

Zur Herstellung der in Tabelle 2 genannten Beispiele 4-6 und V2 wird zunächst Wasser bei Raumtemperatur vorgelegt. Unter Rühren werden anschließend die Wirkstoffe e zugegeben (im Falle von Iodosulfuron erfolgt eine Umsetzung mit NaOH (32%) auf pH 8) zugegeben. Es erfolgt die Zugabe von b1), b2), c1), c2) sowie f. Komponente a) wird nun warm (65°C im Falle von Mefenpyr-diethyl) zugegeben und es wird 2 bis 24 h gerührt, bis sich Kristalle bilden. Anschließend erfolgt eine Nassvermahlung beispielsweise mittels einer Perlmühle.

### Herstellung eines nicht erfindungsgemäßen Teilkonzentrats

Zur Herstellung des in Tabelle 2 genannten Beispiels V1 wird zunächst Wasser bei Raumtemperatur vorgelegt. Unter Rühren werden anschließend die Wirkstoffe e) zugegeben (im Falle von Iodosulfuron erfolgt eine Umsetzung mit NaOH (32%) auf pH 8) zugegeben. Es erfolgt die Zugabe von b1), b2), c1), c2) sowie f. Komponente a) wird nun in Solvesso^{®} 200 ND gelöst und als Lösung zugegeben. Anschließend erfolgt eine Nassvermahlung beispielsweise mittels einer Perlmühle. Es bildet sich eine Suspoemulsion aus dispergierten Feststoffen e) und emulgiertem a).

Die so erhaltenen erfindungsgemäßen TK Slurries der Beispiele 1 bis 3 und des nicht erfindungsgemäßen Beispiels V1 werden zum WG weiterverarbeitet. Es erfolgt eine Wirbelschichttrocknung gemäß Stand der Technik. Beispiele 1 - 3 sind frei von organischen Lösemitteln, V1 enthält noch 16 Gew.-% Solvesso^{®} 200 ND.

**Tabelle 3: Technische Konzentrate: (Angaben erfolgen in Gewichtsprozent, Gew.-%)**

| **Komponente** | | | | | |
|---|---|---|---|---|---|
| | | **4** | **5** | **6** | **V1** |
| **a** | Mefenpyr-diethyl | 6,25 | 6,25 | 6,25 | 6,25 |
| **e** | Iodosulfuron-methyl | 1,2 | 1,2 | 1,2 | 1,2 |
| **e** | Mesosulfuron-methyl | 3,59 | 3,59 | 3,59 | 3,59 |
| **b1** | Morwet^{®} D-425 | 12,5 | 12,5 | 12,5 | 12,5 |
| **b1** | Morwet^{®} IP | 2,5 | 2,5 | 2,5 | 2,5 |
| **f** | NaOH (32%) | 1,19 | 1,19 | 1,19 | 1,19 |
| **c1** | Aerosil^{®} 200 | | 5,0 | | 5,0 |
| **c1** | Sipernat^{®} 22S | 5,0 | | 5,0 | |
| **c2** | Kaolin^{®} TEC1 | 15,75 | 15,75 | | 4,5 |
| **c2** | CaCO3 | | | 15,75 | |
| **b2** | Sokalan^{®} K 30 | 1,0 | 1,0 | 1,0 | 1,0 |
| **f** | Silfoam^{®} SE 2 | 2,0 | 2,0 | 2,0 | 2,0 |
| **f** | Calsogen^{®} 4814 | | | | 1,62 |
| **f** | Emulsogen^{®} 3510 | | | | 1,39 |
| **Wasser** | | 49,02 | 49,02 | 49,02 | 49,02 |
| **Solvesso^{®} 200 ND** | | | | | 8,25 |
| **Gesamt:** | | 100 | 100 | 100 | 100 |
| | | | | | |

### Stabilität der WG:

Die erfindungsgemäßen Beispiele der aus den technischen Konzentraten 4-6 sowie V1 hergestellten Wasserdispergierbaren Granulate (4WG-6WG bzw. V1 WG) weisen eine ausgezeichnete Lagerstabilität auf. Sie sind bei Raumtemperatur mindestens 2 Jahre und bei 40°C mindestens 3 Monate ohne erkennbare Veränderung stabil. Vergleichsbeispiel V1 WG enthält das unerwünschte Solvesso^{®} 200 ND.

**Tabelle 4: Lagerstabilität und weitere Formulierungseigenschaften**

| Testmethode | CIPAC Prüfnorm | Beispiele | | | |
|---|---|---|---|---|---|
| | | 4 WG | 5 WG | 6 WG | V1 WG |
| chemischer Abbau des Wirkstoffs 8W40 | interne analytische Methode | nein | nein | nein | nein |
| Suspendierbarkeit 0TW in % | MT 184 | 71 | 56 | 79 | 93 |
| Suspendierbarkeit 8W40 in % | MT 184 | gleichbleibend | gleichbleibend | gleichbleibend | gleichbleibend |

## Patentansprüche

1. Verfahren zur Herstellung wässriger Formulierungen frei von organischen Lösungmitteln, **dadurch**
**gekennzeichnet, dass** zunächst in einem ersten Schritt mindestens ein agrochemischer Wirkstoff a) mit einem Schmelztemperaturbereich zwischen 50°C und 80°C aufgeschmolzen wird, anschließend die Schmelze unter Rühren in Wasser gegeben wird, wobei das Wasser mindestens ein ionisches und/oder nicht-ionisches Dispergiermittel b) enthält und in einem zweiten Schritt die Mischung unter den Schmelzpunkt des Wirkstoffs abgekühlt wird,
**dadurch gekennzeichnet, dass** der Wirkstoff a) Mefenpyr-diethyl ist, und wobei im ersten Schritt die Komponente a) in eine wässrige Lösung, enthaltend ein ionisches Dispergiermittel b1) und ein Trägermaterial c1) sowie ein Füllstoff c2) gegeben wird, und wobei das Wasser eine Temperatur zwischen 0°C und 40 °C hat, und wobei im zweiten Schritt während der Abkühlung für eine Dauer von 5 Minuten bis 24 h gerührt wird, und wobei sich Mefenpyr-diethyl-Kristalle im Mikroskop zu mindestens 90 Gew.-%, bezogen auf eingesetztes Mefenpyr-diethyl, nachweisen lassen und der kristalline Wirkstoff keine amorphe Struktur mehr aufweist,
und wobei c1) ausgewählt ist aus der Gruppe der hochsaugfähigen Träger mit einer Aufnahmefähigkeit von wenigstens 200 g Dibutylphthalat pro 100 g Trägermaterial, wobei der hochsaugfähige Träger aus der Gruppe der Kieselsäuren ausgewählt ist.

2. Verfahren gemäß Anspruch 1, **dadurch gekennzeichnet, dass** in einem dritten Schritt die Vermahlung des auskristallisierten Produktes erfolgt, wobei mindestens 50% der Partikel eine Größe von 1 bis 5 µm (d50, Volumenpartikel) aufweisen.

3. Technische Konzentrate (TK) erhältlich nach Verfahren gemäß Anspruch 2.

4. Wasserdispergierbare Granulate (WG) erhältlich nach Verfahren gemäß Anspruch 1, **dadurch gekennzeichnet, dass** nach dem dritten Schritt die Entfernung des Wassers erfolgt, und wobei die Granulate mit Wirbelschichttechnik erzeugt werden.

5. Lösemittelfreie, wasserdispergierbare Technische Konzentrate (TK's) erhältlich nach dem Verfahren gemäß Anspruch 2, enthaltend
- ein Wirkstoff a) mit einem Schmelztemperaturbereich zwischen 50 und 80°C, wobei der Wirkstoff a) Mefenpyr-diethyl ist,
- ein oder mehrere anionische Emulgatoren b1),
- ein oder mehrere nichtionische Emulgatoren b2),
- mindestens ein oder mehrere Trägermaterialien c1) und
- mindestens ein Füllstoff c2).

6. Lösemittelfreie, wasserdispergierbare Technische Konzentrate (TK's) gemäß Anspruch 3 oder 5, **dadurch gekennzeichnet, dass** diese einen Wirkstoff e) aus der Gruppe der Sulfonylharnstoffe, der HPPD (4-hydroxyphenylpyruvate dioxygenase) Inhibitoren, aus der Gruppe der ALS (acetolactate synthase) Hemmer und/oder typischer Pigmentbleicher enthalten.

7. Lösemittelfreie, wasserdispergierbare Suspensionskonzentrate (SC's) gemäß Anspruch 6, **dadurch gekennzeichnet, dass** der Wirkstoff e) ausgewählt ist aus der Gruppe enthaltend Mesosulfuron methyl, Iodosulfuron-methyl-sodium bzw. -säure, Amidosulfuron, Thiencarbazone-methyl oder Diflufenican.

8. Lösungsmittelfreie, wasserdispergierbare Suspensionskonzentrate (SC's) erhältlich nach dem Verfahren gemäß Anspruch 2, enthaltend
- ein Wirkstoff a) mit einem Schmelztemperaturbereich zwischen 50 und 80°C wobei der Wirkstoff a) Mefenpyr-diethyl ist,
- ein oder mehrere anionische Emulgatoren b1),
- ein oder mehrere nichtionische Emulgatoren b2),
- ein Trägermaterial c1) und
- mindestens ein oder mehrere Verdicker d).

9. Lösemittelfreie, wasserdispergierbare Suspensionskonzentrate (SC's) gemäß Anspruch 8, **dadurch gekennzeichnet, dass** diese einen Wirkstoff e) aus der Gruppe der Auxine, aus der Gruppe der Inhibitoren der Pigment Synthese, aus der Gruppe der DOXP Synthase Hemmer und/oder aus der Gruppe der VLCFA Hemmer enthalten.

10. Lösemittelfreie, wasserdispergierbare Suspensionskonzentrate (SC's) gemäß Anspruch 9, **dadurch gekennzeichnet, dass** der Wirkstoff e) ausgewählt ist aus der Gruppe enthaltend Halauxifen-methyl, Diflufenican, Clomazone, Isoxazolidinone, 2-[(2,4-dichlorophenyl)methyl]-4,4-dimethyl- (CAS Nummer 81777-95-9) oder Flufenacet.

11. Herbizides Mittel, erhältlich aus Formulierungen hergestellt nach dem Verfahren gemäß Anspruch 1 durch Verdünnen mit Wasser.

## Claims

1. Process for producing aqueous formulations free of organic solvents, **characterized in that** at least one active agrochemical ingredient a) having a melting temperature range between 50°C and 80°C is first melted in a first step, then the melt is added to water while stirring, the water containing at least one ionic and/or nonionic dispersant b), and the mixture is cooled below the melting point of the active ingredient in a second step,
**characterized in that** the active ingredient a) is mefenpyr-diethyl, and wherein
in the first step component a) is added to an aqueous solution comprising an ionic dispersant b1) and a carrier material c1) and also a filler c2), and wherein the water has a temperature between 0°C and 40°C, and wherein, in the second step, the mixture is stirred during the cooling for a period of 5 minutes to 24 h, and wherein mefenpyr-diethyl crystals can be detected under the microscope to an extent of at least 90% by weight, based on mefenpyr-diethyl used, and the crystalline active ingredient no longer has an amorphous structure,
and wherein c1) is selected from the group of the highly absorptive carriers having an absorption capacity of at least 200 g of dibutyl phthalate per 100 g of carrier material, wherein the highly adsorptive carrier is selected from the group of the silicas.

2. Process according to Claim 1, **characterized in that**, in a third step, the crystallized product is ground, with at least 50% of the particles having a size of 1 to 5 µm (d50, volume particles).

3. Technical concentrate (TC) obtainable by the process according to Claim 2.

4. Water-dispersible granules (WG) obtainable by the method according to Claim 1, **characterized in that** the water is removed after the third step, and wherein the granules are produced by fluidized bed methodology.

5. Solvent-free, water dispersible technical concentrates (TCs) obtainable by the method according to Claim 2, comprising
- an active ingredient a) having a melting temperature range between 50 and 80°C, where the active ingredient a) is mefenpyr-diethyl,
- one or more anionic emulsifiers b1),
- one or more nonionic emulsifiers b2),
- at least one or more than one carrier material c1) and
- at least one filler c2).

6. Solvent-free, water-dispersible technical concentrates (TCs) according to Claim 3 or 5, **characterized in that** they comprise an active ingredient e) from the group of the sulfonylureas, the HPPD (4-hydroxyphenylpyruvate dioxygenase) inhibitors, from the group of the ALS (acetolactate synthase) inhibitors and/or typical pigment bleachers.

7. Solvent-free, water-dispersible suspension concentrates (SCs) according to Claim 6, **characterized in that** the active ingredient e) is selected from the group comprising mesosulfuron methyl, iodosulfuron-methyl-sodium or -acid, amidosulfuron, thiencarbazone-methyl or diflufenican.

8. Solvent-free, water-dispersible suspension concentrates (SCs) obtainable by the method according to Claim 2, comprising
- an active ingredient a) having a melting temperature range between 50 and 80°C, where the active ingredient a) is mefenpyr-diethyl,
- one or more anionic emulsifiers b1),
- one or more nonionic emulsifiers b2),
- a carrier material c1) and
- at least one or more than one thickener d).

9. Solvent-free, water-dispersible suspension concentrates (SCs) according to Claim 8, **characterized in that** they comprise an active ingredient e) from the group of the auxins, from the group of the inhibitors of pigment synthesis, from the group of the DOXP synthase inhibitors and/or from the group of the VLCFA inhibitors.

10. Solvent-free, water-dispersible suspension concentrates (SCs) according to Claim 9, **characterized in that** the active ingredient e) is selected from the group comprising halauxifen-methyl, diflufenican, clomazone, isoxazolidinone, 2-[(2,4-dichlorophenyl)methyl] -4,4-dimethyl- (CAS Number 81777-95-9) or flufenacet.

11. Herbicidal composition obtainable from formulations produced by the process according to Claim 1 by dilution with water.

## Revendications

1. Procédé de préparation de formulations aqueuses exemptes de solvants organiques, **caractérisé en ce que**, dans une première étape, au moins un principe actif agrochimique a) présentant une plage de température de fusion entre 50°C et 80°C est d'abord fondu, ensuite, la masse fondue est introduite sous agitation dans de l'eau, l'eau contenant au moins un dispersant b) ionique et/ou non ionique et, dans une deuxième étape, le mélange est refroidi sous le point de fusion du principe actif,
**caractérisé en ce que** le principe actif a) est le méfenpyr-diéthyl et
dans la première étape, le composant a) étant introduit dans une solution aqueuse, contenant un dispersant ionique b1) et un matériau support c1) ainsi qu'une charge c2) et l'eau présentant une température entre 0°C et 40°C et, dans la deuxième étape, pendant le refroidissement, une agitation étant effectuée pendant une durée de 5 minutes à 24 h et des cristaux de méfenpyr-diéthyl pouvant être mis en évidence sous un microscope à raison d'au moins 90% en poids par rapport au méfenpyr-diéthyl utilisé et le principe actif cristallin ne présentant plus de structure amorphe,
et c1) étant choisi dans le groupe des supports hautement absorbants, présentant une capacité d'absorption d'au moins 200 g de phtalate de dibutyle par 100 g de matériau support, le support hautement absorbant étant choisi dans le groupe des silices.

2. Procédé selon la revendication 1, **caractérisé en ce que** dans une troisième étape, le broyage du produit cristallisé est effectué, au moins 50% des particules présentant une grosseur de 1 à 5 µm (d50, particules volumiques).

3. Concentrats de qualité technique (TK) pouvant être obtenus selon des procédés selon la revendication 2.

4. Granulats dispersibles dans l'eau (WG) pouvant être obtenus selon le procédé selon la revendication 1, **caractérisés en ce qu'**après la troisième étape, l'élimination de l'eau est effectuée et les granulats étant générés à l'aide de la technique de la couche tourbillonnante.

5. Concentrats de qualité technique exempts de solvants, dispersibles dans l'eau (TK) pouvant être obtenus selon le procédé selon la revendication 2, contenant
- un principe actif a) présentant une plage de température de fusion entre 50 et 80°C, le principe actif a) étant le méfenpyr-diéthyl,
- un ou plusieurs émulsifiants anioniques b1),
- un ou plusieurs émulsifiants non ioniques b2),
- au moins un ou plusieurs matériaux support c1) et
- au moins une charge c2).

6. Concentrats de qualité technique exempts de solvants, dispersibles dans l'eau (TK) selon la revendication 3 ou 5, **caractérisés en ce qu'**ils contiennent un principe actif e) du groupe des sulfonylurées, des inhibiteurs de l'HPPD (4-hydroxyphénylpyruvate dioxygénase), du groupe des inhibiteurs d'ALS (acétolactate synthétase) et/ou des agents de blanchiment caractéristiques de pigments.

7. Concentrats en suspension exempts de solvants, dispersibles dans l'eau (SC) selon la revendication 6, **caractérisés en ce que** le principe actif e) est choisi dans le groupe contenant le mésosulfuron-méthyl, l'iodosulfuron-méthyl-sodium ou l'iodosulfuron-méthyl-acide, l'amidosulfuron, le thiencarbazone-méthyl ou le diflufenican.

8. Concentrats en suspension exempts de solvants, dispersibles dans l'eau (SC) pouvant être obtenus selon le procédé selon la revendication 2, contenant
- un principe actif a) présentant une plage de température de fusion entre 50 et 80°C, le principe actif a) étant le méfenpyr-diéthyl,
- un ou plusieurs émulsifiants anioniques b1),
- un ou plusieurs émulsifiants non ioniques b2),
- un matériau support c1) et
- au moins un ou plusieurs épaississants d).

9. Concentrats en suspension exempts de solvants, dispersibles dans l'eau (SC) selon la revendication 8, **caractérisés en ce qu'**ils contiennent un principe actif e) du groupe des auxines, du groupe des inhibiteurs de la pigment synthétase, du groupe des inhibiteurs de la DOXP synthétase et/ou du groupe des inhibiteurs des VLCFA (acides gras à très longue chaîne).

10. Concentrats en suspension exempts de solvants, dispersibles dans l'eau (SC) selon la revendication 9, **caractérisés en ce que** le principe actif e) est choisi dans le groupe contenant l'halauxifène-méthyl, le diflufenican, le clomazone, la 2-[(2,4-dichlorophényl)méthyl]-4,4-diméthyl-isoxazolidinone (n° CAS 81777-95-9) ou le flufénacet.

11. Agent herbicide pouvant être obtenu à partir de formulations préparées selon le procédé selon la revendication 1, par dilution avec de l'eau.
